# EUROPEAN PATENT APPLICATION

(11) **EP 4 832 604 A1**
(43) Date of publication of application: **28.10.2026**
(21) Application number: 25747900.6
(22) Date of filing: 24.01.2025
(51) Int. Cl.: H04W 56/00

(54) **COMMUNICATION METHOD AND RELATED APPARATUS**

(30) Priority: 29.01.2024 CN 202410126207
(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Huawei European IPR
(86) International application number: PCT/CN2025/075015
(87) International publication number: WO 2025/162332

(57) **Abstract**

A communication method and a related apparatus are provided. The method includes: receiving a plurality of parameter sets from a ground station, where the plurality of parameter sets are carried in a broadcast message of a same cell, the plurality of parameter sets include parameters that correspond to a plurality of communication apparatuses and that are used to determine TAs, and apparatus types of the plurality of communication apparatuses include a relay apparatus and/or a terminal apparatus; and determining a TA based on at least one of the plurality of parameter sets. Broadcasting the plurality of parameter sets corresponding to the plurality of communication apparatuses in the broadcast message of the same cell helps reduce resource waste.

## Description

This application claims priority to Chinese Patent Application No. 202410126207.7, filed with the China National Intellectual Property Administration on Monday, January 29, 2024 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

In a satellite system, a terminal forwards data to a ground station (which may also be referred to as a gateway (gateway)) through inter-satellite links. Therefore, satellites closer to the ground station need to forward more data, causing high inter-satellite forwarding pressure. In addition, due to satellite movement, different satellites sequentially become the one closer to the ground station. Therefore, most satellites need to support maximum-capacity inter-satellite forwarding, leading to high satellite hardware costs. To reduce inter-satellite forwarding pressure and satellite hardware costs, a satellite-to-ground forwarding network may be used. In such a network, signals transmitted between terminals and ground stations may be forwarded via satellites and apparatuses deployed on the ground. Both satellites and apparatuses deployed on the ground can be regarded as forwarding nodes, which may be network controlled transparent nodes (network controlled transparent nodes, NCTNs) with amplify-and-forward functionality, or network controlled regenerative nodes (network controlled regenerative nodes, NCRNs) with decode-and-forward functionality.

In the satellite-to-ground forwarding network, the satellites and the apparatuses deployed on the ground may be collectively referred to as relay apparatuses, which forwards signals between terminals and ground stations (or base stations). To implement uplink synchronization, the ground station may broadcast parameters such as ephemeris, common timing advance (common timing advance, common TA), a common timing advance drift (common TA drift), common timing advance drift variant (common TA drift rate), and timing advance (timing advance, TA) offset (offset), so that the terminals or relay apparatuses determines a TA based on these parameters.

Currently, in the satellite-to-ground forwarding network, when relay apparatuses access the ground station as terminals, each relay apparatus needs to determine its TA,. Since relay apparatuses may access different cells (for example, relay apparatuses located in different coverage areas, each corresponding to one cell), the parameters used to determine the TAs may be different. In this way, for different cells, the ground station must occupy different time-frequency resources to broadcast cell-specific parameters that are used to determine the TAs, easily causing resource waste.

### SUMMARY

This application provides a communication method and a related apparatus to reduce resource waste.

According to a first aspect, this application provides a communication method. The method may be performed by a communication apparatus. The communication apparatus may be a first communication apparatus, or may be a component (for example, a chip or a chip system) disposed in the first communication apparatus, or may be a logical module or software that can implement all or some functions of the first communication apparatus. This is not limited in this application.

For example, the method includes: receiving a plurality of parameter sets from a ground station, where the plurality of parameter sets are carried in a broadcast message of a same cell, the plurality of parameter sets include parameters that correspond to a plurality of communication apparatuses and that are used to determine TAs, and apparatus types of the plurality of communication apparatuses include a relay apparatus and/or a terminal apparatus; and determining a TA based on at least one of the plurality of parameter sets.

The first communication apparatus is any one of the plurality of communication apparatuses. The apparatus types of the plurality of communication apparatuses include the relay apparatus and/or the terminal apparatus (which may also be referred to as a terminal). The relay apparatus is configured to forward a signal between the ground station and the terminal apparatus, the terminal apparatus may be used as a destination of the signal, and the ground station may be used as a source of the signal. For example, the plurality of communication apparatuses are all relay apparatuses, and the first communication apparatus may be any one of the plurality of relay apparatuses. For another example, the plurality of communication apparatuses are all terminal apparatuses, and the first communication apparatus may be any one of the plurality of terminal apparatuses. For still another example, the plurality of communication apparatuses include at least one relay apparatus and at least one terminal apparatus, and the first communication apparatus may be any one of the at least one terminal apparatus, or may be any one of the at least one relay apparatus.

In this application, the cell may be understood as an area in which the relay apparatus provides a service or an area in which the ground station provides a service. The plurality of parameter sets are carried in the broadcast message of the same cell, in other words, a broadcast message of one cell may carry the plurality of parameter sets. It should be noted that there may be one or more cells in which the plurality of parameter sets are broadcast, but a quantity of cells in which the plurality of parameter sets are broadcast is less than a total quantity of areas in which the relay apparatus and the ground station provide services.

In this application, that the plurality of parameter sets include the parameters that correspond to the plurality of communication apparatuses and that are used to determine the TAs may be understood as follows: The plurality of parameter sets are in one-to-one correspondence with the plurality of communication apparatuses, and each parameter set includes a parameter used by a corresponding communication apparatus to determine a TA.

In the foregoing technical solution, the plurality of parameter sets corresponding to the plurality of communication apparatuses are carried in the broadcast message of the same cell, in other words, the plurality of parameter sets may be broadcast in the broadcast message of the same cell. The plurality of parameter sets correspond to the plurality of communication apparatuses, and the plurality of parameter sets are broadcast by using a time-frequency resource corresponding to the cell. The ground station does not need to separately occupy different time-frequency resources for the communication apparatuses to broadcast the parameter sets corresponding to the communication apparatuses. This helps reduce resource waste.

According to a second aspect, this application provides a communication method. The method may be performed by a communication apparatus. The communication apparatus may be a ground station, or may be a component (for example, a chip or a chip system) disposed in the ground station, or may be a logical module or software that can implement all or some functions of the ground station. This is not limited in this application.

For example, the method includes: generating a plurality of parameter sets, where the plurality of parameter sets include parameters that correspond to a plurality of communication apparatuses and that are used to determine TAs, and apparatus types of the plurality of communication apparatuses include a relay apparatus and/or a terminal apparatus; and sending the plurality of parameter sets, where the plurality of parameter sets are carried in a broadcast message of a same cell.

In the foregoing technical solution, the ground station may broadcast, based on the broadcast message of the same cell, the plurality of parameter sets corresponding to the plurality of communication apparatuses. In other words, the ground station may broadcast the plurality of parameter sets based on a time-frequency resource corresponding to the cell, and does not need to separately occupy different time-frequency resources for the communication apparatuses to broadcast the parameter sets corresponding to the communication apparatuses. This helps reduce resource waste.

With reference to the first aspect and the second aspect, in some possible implementations, the plurality of parameter sets are in one-to-one correspondence with a plurality of reference locations, and the plurality of reference locations are in coverage areas of the relay apparatus and the ground station. In other words, each of the plurality of parameter sets corresponds to one reference location, and the plurality of parameter sets are distinguished based on the plurality of reference locations. The method provided in this application is more universal. For example, the method is applicable to both a scenario in which a quantity of parameter sets is small and a scenario in which a quantity of parameter sets is large. Even if the quantity of parameter sets is large, the parameter sets may also be distinguished based on different reference locations.

When the plurality of parameter sets are in one-to-one correspondence with the plurality of reference locations, the at least one parameter set may be determined based on the plurality of reference locations.

In other words, the first communication apparatus may determine at least one parameter set based on the plurality of reference locations, and then determine the TA based on the at least one parameter set.

In a possible implementation, the at least one parameter set includes a parameter set corresponding to a reference location that is in the plurality of reference locations and that is closest to the first communication apparatus. In other words, for any one of the plurality of communication apparatuses, at least one parameter set used to determine a TA includes a parameter set corresponding to a reference location that is in the plurality of reference locations and that is closest to the communication apparatus. In this way, accuracy of the determined TA is higher.

In an example, the first communication apparatus determines a TA based on a parameter set (which may be denoted as a target parameter set) in the plurality of parameter sets. In this case, the target parameter set may be the parameter set corresponding to the reference location that is in the plurality of reference locations and that is closest to the first communication apparatus.

In another example, the first communication apparatus determines a TA based on m parameter sets in the plurality of parameter sets, where m is an integer greater than 1, and a value of m is less than or equal to a quantity of the plurality of parameter sets. In this case, the m parameter sets may include the parameter set corresponding to the reference location that is in the plurality of reference locations and that is closest to the first communication apparatus and a parameter set corresponding to a location of a second communication apparatus, and the second communication apparatus is the ground station or a relay apparatus between the first communication apparatus and the ground station/a base station.

With reference to the first aspect and the second aspect, in some possible implementations, the plurality of parameter sets are in one-to-one correspondence with identifiers of the apparatus types of the plurality of communication apparatuses. In other words, each of the plurality of parameter sets corresponds to an identifier of a type of one communication apparatus. The plurality of parameter sets are distinguished based on the identifiers of the apparatus types of the plurality of communication apparatuses.

The plurality of parameter sets are in one-to-one correspondence with the identifiers of the apparatus types of the plurality of communication apparatuses, so that a function requirement on the first communication apparatus (any one of the plurality of communication apparatuses) is reduced. For example, even if the first communication apparatus does not have a positioning function, in other words, when the first communication apparatus cannot determine a location of the first communication apparatus, the corresponding parameter set may be determined based on a type of the communication apparatus.

When the plurality of parameter sets are in one-to-one correspondence with the identifiers of the apparatus types of the plurality of communication apparatuses, the at least one parameter set includes a parameter set corresponding to an identifier of an apparatus type of the first communication apparatus. In other words, for any one of the plurality of communication apparatuses, at least one parameter set used to determine a TA includes a parameter set corresponding to an identifier of an apparatus type of the communication apparatus.

In an example, the first communication apparatus determines a TA based on a parameter set (which may be denoted as a target parameter set) in the plurality of parameter sets. In this case, the target parameter set may be the parameter set corresponding to the identifier of the apparatus type of the first communication apparatus.

In another example, the first communication apparatus determines a TA based on m parameter sets in the plurality of parameter sets, where m is an integer greater than 1, and a value of m is less than or equal to a quantity of the plurality of parameter sets. In this case, the m parameter sets may include the parameter set corresponding to the identifier of the apparatus type of the first communication apparatus and a parameter set corresponding to an identifier of an apparatus type of a second communication apparatus, and the second communication apparatus is the ground station or a relay apparatus between the first communication apparatus and the ground station.

With reference to the first aspect and the second aspect, in some possible implementations, each of the plurality of parameter sets includes a location of the ground station and/or a location of the relay apparatus, and the relay apparatus is configured to forward a signal between the ground station and the terminal apparatus.

Each of the plurality of parameter sets includes the location of the ground station and/or the location of the relay apparatus, in other words, the TA may be determined based on the location of the ground station and the location of the relay apparatus. This helps reduce parameters carried in the parameter set, to reduce signaling overheads.

With reference to the first aspect and the second aspect, in some possible implementations, each of the plurality of parameter sets further includes one or more of the following: a common timing advance, a common timing advance drift, a common timing advance drift variant, a scheduling offset, or an effective timing offset.

Each parameter set may further include the common timing advance, the common timing advance drift, and the common timing advance drift variant, in other words, the TA may be determined based on the foregoing parameters. This helps reduce calculation complexity of the first communication apparatus (any one of the foregoing plurality of communication apparatuses). For example, the first communication apparatus may directly calculate a delay compensation amount between the relay apparatus and the ground station based on the common timing advance, the common timing advance drift, and the common timing advance drift variant, to reduce the calculation complexity of the first communication apparatus.

With reference to the first aspect, in some possible implementations of the first aspect, when each parameter set includes the scheduling offset, the first communication apparatus may further determine the scheduling offset; and/or when each parameter set includes the effective timing offset, the first communication apparatus may further determine the effective timing offset.

With reference to the first aspect, in some possible implementations of the first aspect, after determining the TA, the method further includes: performing uplink transmission with the ground station based on the TA.

According to a third aspect, this application provides a communication method. The method may be performed by a communication apparatus. The communication apparatus may be a first communication apparatus, or may be a component (for example, a chip or a chip system) disposed in the first communication apparatus, or may be a logical module or software that can implement all or some functions of the first communication apparatus. This is not limited in this application.

For example, the method includes: receiving a plurality of parameter sets from a ground station, where the plurality of parameter sets are carried in a broadcast message of a same cell, the plurality of parameter sets include parameters that correspond to a plurality of communication apparatuses and that are used to determine offsets, and apparatus types of the plurality of communication apparatuses include a relay apparatus and/or a terminal apparatus; and determining an offset based on at least one of the plurality of parameter sets, where the offset includes a scheduling offset and/or an effective timing offset.

In this application, that the plurality of parameter sets include the parameters that correspond to the plurality of communication apparatuses and that are used to determine the offsets may be understood as follows: The plurality of parameter sets are in one-to-one correspondence with the plurality of communication apparatuses, and each parameter set includes a parameter used by a corresponding communication apparatus to determine an offset.

In the foregoing technical solution, the plurality of parameter sets corresponding to the plurality of communication apparatuses are carried in the broadcast message of the same cell, in other words, the plurality of parameter sets may be broadcast in the broadcast message of the same cell. The plurality of parameter sets correspond to the plurality of communication apparatuses, and the plurality of parameter sets are broadcast by using a time-frequency resource corresponding to the cell. The ground station does not need to separately occupy different time-frequency resources for the communication apparatuses to broadcast the parameter sets corresponding to the communication apparatuses. This helps reduce resource waste.

According to a fourth aspect, this application provides a communication method. The method may be performed by a communication apparatus. The communication apparatus may be a ground station, or may be a component (for example, a chip or a chip system) disposed in the ground station, or may be a logical module or software that can implement all or some functions of the ground station. This is not limited in this application.

For example, the method includes: generating a plurality of parameter sets, where the plurality of parameter sets include parameters that correspond to a plurality of communication apparatuses and that are used to determine offsets, apparatus types of the plurality of communication apparatuses include a relay apparatuses and/or a terminal apparatuses, and the offset include a scheduling offset and/or an effective timing offset; and sending the plurality of parameter sets, where the plurality of parameter sets are carried in a broadcast message of a same cell.

In the foregoing technical solution, the ground station may broadcast, based on the broadcast message of the same cell, the plurality of parameter sets corresponding to the plurality of communication apparatuses, and the plurality of parameter sets correspond to the plurality of communication apparatuses. In other words, the ground station may broadcast the plurality of parameter sets based on a time-frequency resource corresponding to the cell, and does not need to separately occupy different time-frequency resources for the communication apparatuses to broadcast the parameter sets corresponding to the communication apparatuses. This helps reduce resource waste.

With reference to the third aspect and the fourth aspect, in some possible implementations, the plurality of parameter sets are in one-to-one correspondence with a plurality of reference locations, and the plurality of reference locations are in coverage areas of the relay apparatus and the ground station. In other words, each of the plurality of parameter sets corresponds to one reference location, and the plurality of parameter sets are distinguished based on the plurality of reference locations. The method provided in this application is more universal. For example, the method is applicable to both a scenario in which a quantity of parameter sets is small and a scenario in which a quantity of parameter sets is large. Even if the quantity of parameter sets is large, the parameter sets may also be distinguished based on different reference locations.

When the plurality of parameter sets are in one-to-one correspondence with the plurality of reference locations, the at least one parameter set may be determined based on the plurality of reference locations.

In other words, the first communication apparatus may determine at least one parameter set based on the plurality of reference locations, and then determine the offset based on the at least one parameter set.

In a possible implementation, the at least one parameter set includes a parameter set corresponding to a reference location that is in the plurality of reference locations and that is closest to the first communication apparatus. In other words, for any one of the plurality of communication apparatuses, at least one parameter set used to determine an offset includes a parameter set corresponding to a reference location that is in the plurality of reference locations and that is closest to the communication apparatus. In this way, accuracy of the determined offset is higher.

In an example, the first communication apparatus determines an offset based on a parameter set (which may be denoted as a target parameter set) in the plurality of parameter sets. In this case, the target parameter set may be the parameter set corresponding to the reference location that is in the plurality of reference locations and that is closest to the first communication apparatus.

In another example, the first communication apparatus determines an offset based on m parameter sets in the plurality of parameter sets, where m is an integer greater than 1, and a value of m is less than or equal to a quantity of the plurality of parameter sets. For example, after the first communication apparatus determines the parameter set corresponding to the reference location that is closest to the first communication apparatus, if an offset in the parameter set is a relative value, for example, the offset in the parameter set is a difference relative to an offset in another parameter set, the first communication apparatus may determine, based on the parameter set and the another parameter set, the offset corresponding to the first communication apparatus.

With reference to the third aspect and the fourth aspect, in some possible implementations, the plurality of parameter sets are in one-to-one correspondence with identifiers of the apparatus types of the plurality of communication apparatuses. In other words, each of the plurality of parameter sets corresponds to an identifier of a type of one apparatus. The plurality of parameter sets are distinguished based on the identifiers of the apparatus types of the plurality of communication apparatuses.

The plurality of parameter sets are in one-to-one correspondence with the identifiers of the apparatus types of the plurality of communication apparatuses, so that a function requirement on the first communication apparatus (any one of the plurality of communication apparatuses) is reduced. For example, even if the first communication apparatus does not have a positioning function, in other words, when the first communication apparatus cannot determine a location of the first communication apparatus, the corresponding parameter set may be determined based on a type of the communication apparatus.

When the plurality of parameter sets are in one-to-one correspondence with the identifiers of the apparatus types of the plurality of communication apparatuses, the at least one parameter set includes a parameter set corresponding to an identifier of an apparatus type of the first communication apparatus. In other words, for any one of the plurality of communication apparatuses, at least one parameter set used to determine an offset includes a parameter set corresponding to an identifier of an apparatus type of the communication apparatus.

In an example, the first communication apparatus determines an offset based on a parameter set (which may be denoted as a target parameter set) in the plurality of parameter sets. In this case, the target parameter set may be the parameter set corresponding to the identifier of the apparatus type of the first communication apparatus.

In another example, the first communication apparatus determines an offset based on m parameter sets in the plurality of parameter sets, where m is an integer greater than 1, and a value of m is less than or equal to a quantity of the plurality of parameter sets.

With reference to the third aspect and the fourth aspect, in some possible implementations, each of the plurality of parameter sets includes the offset.

With reference to the third aspect and the fourth aspect, in some possible implementations, each of the plurality of parameter sets further includes one or more of the following: a location of the relay apparatus, a location of the ground station, a common timing advance, a common timing advance drift, or a common timing advance drift variant.

According to a fifth aspect, this application provides a communication apparatus, to implement the method according to any one of the first aspect to the fourth aspect and the possible implementations of the first aspect to the fourth aspect. The communication apparatus includes a corresponding module configured to perform the foregoing method. The module included in the communication apparatus may be implemented by using software and/or hardware.

According to a sixth aspect, this application provides a communication apparatus. The communication apparatus includes a processor, and the processor may be configured to execute a computer program in a memory, to implement the method according to any one of the first aspect to the fourth aspect and the possible implementations of the first aspect to the fourth aspect.

Optionally, the communication apparatus further includes a communication interface, and the processor is coupled to the communication interface. The communication interface is configured to: receive a signal from a communication apparatus other than the communication apparatus and transmit the signal to the processor, or send a signal from the processor to a communication apparatus other than the communication apparatus. For example, the communication interface may be a transceiver, a circuit, a bus, a module, a pin, or a communication interface of another type.

Optionally, the communication apparatus further includes a memory, and the processor is coupled to the memory. The memory is configured to store program instructions and data. The memory is coupled to the processor, and when executing the instructions stored in the memory, the processor may implement the method according to the foregoing aspects.

According to a seventh aspect, this application provides a communication apparatus, including at least one processor and a communication interface. The communication interface is configured to: receive a signal from a communication apparatus other than the communication apparatus and transmit the signal to the processor, or send a signal from the processor to a communication apparatus other than the communication apparatus. The processor implements the communication method according to any one of the first aspect to the fourth aspect and the possible implementations of the first aspect to the fourth aspect through a logic circuit or by executing code instructions. For example, the communication interface may be a transceiver, a circuit, a bus, a module, a pin, or a communication interface of another type.

Optionally, the communication apparatus may further include a memory, configured to store instructions and data. The memory may be coupled to the processor, and when executing the instructions stored in the memory, the processor implements the communication method according to any one of the first aspect to the fourth aspect and the possible implementations of the first aspect to the fourth aspect.

According to an eighth aspect, this application provides a communication apparatus, including at least one processor and at least one memory. The memory is configured to store instructions and data, and when executing the instructions stored in the memory, the processor may implement the communication method according to any one of the first aspect to the fourth aspect and the possible implementations of the first aspect to the fourth aspect.

Optionally, the communication apparatus further includes a communication interface. The communication interface is used by the communication apparatus to communicate with another communication apparatus. For example, the communication interface may be a transceiver, a circuit, a bus, a module, a pin, or a communication interface of another type.

According to a ninth aspect, this application provides a computer-readable storage medium. The computer-readable storage medium stores a computer program or instructions. When the computer program or the instructions are executed, the method according to any one of the first aspect to the fourth aspect and the possible implementations of the first aspect to the fourth aspect is implemented.

According to a tenth aspect, this application provides a computer program product. The computer program product includes instructions. When the instructions are run, the method according to any one of the first aspect to the fourth aspect and the possible implementations of the first aspect to the fourth aspect is implemented.

According to an eleventh aspect, this application provides a chip system. The chip system includes at least one processor, configured to support an implementation of a function in any one of the first aspect to the fourth aspect and the possible implementations of the first aspect to the fourth aspect, for example, receiving or processing data in the foregoing method.

In a possible design, the chip system further includes a memory, the memory is configured to store program instructions and data, and the memory is located inside or outside the processor.

In a possible design, the chip system further includes an interface circuit and/or a power supply circuit. The interface circuit is configured to transmit data, and the power supply circuit is configured to supply power to the chip system.

The chip system may include a chip, or may include a chip and another discrete component.

According to a twelfth aspect, this application provides a communication system. The communication system includes a first communication apparatus and a ground station, the first communication apparatus is configured to implement the method according to any one of the first aspect and the possible implementations of the first aspect, and the ground station is configured to implement the method according to any one of the second aspect and the possible implementations of the second aspect; or the first communication apparatus is configured to implement the method according to any one of the third aspect or the possible implementations of the third aspect, and the ground station is configured to implement the method according to any one of the fourth aspect or the possible implementations of the fourth aspect.

It should be understood that technical solutions of the fifth aspect to the twelfth aspect of this application correspond to technical solutions of the first aspect to the fourth aspect of this application, and beneficial effects achieved in the aspects and corresponding feasible implementations are similar. Details are not described again.

### BRIEF DESCRIPTION OF DRAWINGS

FIG. 1 is a diagram of an inter-satellite forwarding network according to an embodiment of this application;
FIG. 2 is a diagram of a satellite-to-ground forwarding network according to an embodiment of this application;
FIG. 3 is another diagram of a satellite-to-ground forwarding network according to an embodiment of this application;
FIG. 4 is a diagram of an architecture of a satellite-to-ground forwarding network according to an embodiment of this application;
FIG. 5 is a diagram of another architecture of a satellite-to-ground forwarding network according to an embodiment of this application;
FIG. 6 is a diagram of still another architecture of a satellite-to-ground forwarding network according to an embodiment of this application;
FIG. 7 is a diagram of yet another architecture of a satellite-to-ground forwarding network according to an embodiment of this application;
FIG. 8a and FIG. 8b are diagrams of an uplink data frame and a downlink data frame according to an embodiment of this application;
FIG. 9a and FIG. 9b are other diagrams of an uplink data frame and a downlink data frame according to an embodiment of this application;
FIG. 10a and FIG. 10b are diagrams of a scenario to which a scheduling offset is applicable according to an embodiment of this application;
FIG. 11a and FIG. 11b are diagrams of another scenario to which a scheduling offset is applicable according to an embodiment of this application;
FIG. 12a and FIG. 12b are diagrams of a scenario to which an effective timing offset is applicable according to an embodiment of this application;
FIG. 13 is a diagram of broadcasting a parameter used to determine a TA in each cell according to an embodiment of this application;
FIG. 14 is a diagram of an air-to-ground (air-to-ground, ATG) communication scenario according to an embodiment of this application;
FIG. 15 is a schematic flowchart of a communication method according to an embodiment of this application;
FIG. 16a and FIG. 16b are diagrams of coverage areas in which a relay apparatus and a terminal apparatus are located according to an embodiment of this application;
FIG. 17 is a diagram of broadcasting a plurality of parameter sets according to an embodiment of this application;
FIG. 18 is a schematic flowchart of another communication method according to an embodiment of this application;
FIG. 19 is a block diagram of a communication apparatus according to an embodiment of this application;
FIG. 20 is another block diagram of a communication apparatus according to an embodiment of this application; and
FIG. 21 is still another block diagram of a communication apparatus according to an embodiment of this application.

### DESCRIPTION OF EMBODIMENTS

The following describes technical solutions of this application with reference to the accompanying drawings.

For ease of understanding the technical solutions provided in this application, the following several points are first described.

First, in this application, the terms "include", "contain" and any other variants thereof mean to cover a non-exclusive inclusion. For example, a communication apparatus includes a series of assemblies, modules, or units. The communication apparatus is not limited to including only these assemblies, modules, or units, and may further include other assemblies, modules, or units that are not listed.

Second, in this application, an indication includes an explicit indication (also referred to as a direct indication) and an implicit indication (also referred to as an indirect indication). An explicit indication of information A means that the information A is included. An implicit indication of the information A means that the information A is indicated by using a correspondence between the information A and information B and by directly indicating the information B. Alternatively, the information A may be indicated by using the information B and a preset rule.

Third, in this application, that information C is used to determine information D includes that the information D is determined based only on the information C, and also includes that the information D is determined based on the information C and other information.

Fourth, in this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists. The character "/" usually indicates an "or" relationship between associated objects, but does not exclude an "and" relationship between the associated objects. A specific indicated meaning may be understood with reference to a context. "At least one of the following items (pieces)" or a similar expression thereof indicates any combination of these items, including a single item (piece) or any combination of a plurality of items (pieces).

Fifth, in this application, "sending" and "receiving" indicate signal transmission directions. For example, "sending information to a terminal apparatus" may be understood as that a destination of the information is the terminal apparatus, and may include direct sending through an air interface, or indirect sending through an air interface by another unit or module. "Receiving information from a ground station" may be understood as that a source of the information is the ground station, and may include direct receiving from the ground station through an air interface, or may include indirect receiving from the ground station via another unit or module through an air interface. "Sending" may also be understood as "outputting" of a chip interface, and "receiving" may also be understood as "inputting" of the chip interface.

In other words, sending and receiving may be performed between apparatuses, for example, between the ground station and the terminal apparatus, or may be performed in an apparatus. For example, sending or receiving is performed between components, assemblies, chips, software modules, or hardware modules in the apparatus through a bus, a cable, or an interface.

Sixth, correspondences shown in tables in this application may be configured, or may be predefined. Values of information in the tables are merely examples, and other values may be configured. This is not limited in this application. When a correspondence between the information and parameters is configured, not all the correspondences shown in the tables need to be configured. For example, in the tables in this application, correspondences shown in some rows may not be configured. For another example, appropriate deformations and adjustments such as splitting and combination may be performed based on the foregoing tables. Names of parameters shown in titles of the foregoing tables may alternatively be other names that can be understood by a communication apparatus, and values or representation manners of the parameters may alternatively be other values or representation manners that can be understood by the communication apparatus. In implementations of the foregoing tables, another data structure, for example, an array, a queue, a container, a stack, a linear table, a pointer, a linked list, a tree, a graph, a structure, a class, a pile, or a hash table, may alternatively be used.

Seventh, in this application, a terminal apparatus may also be referred to as a terminal, a terminal device, a user equipment (user equipment, UE), a mobile station, a mobile termination, or the like. The terminal may include but is not limited to: a mobile phone (mobile phone), a tablet computer (pad), a computer having a wireless transceiver function, a virtual reality (virtual reality, VR) device, an augmented reality (augmented reality, AR) device, a mixed reality (mixed reality, MR) device, an extended reality (extended reality, XR) device, a wireless terminal in industrial control (industrial control), a vehicle-mounted device, a wireless terminal in self-driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device, a video player, a holographic projector, or the like. A specific form of the terminal is not limited in this application.

Eighth, in this application, when a ground station needs to occupy different time-frequency resources for different cells to broadcast parameters that correspond to the cells and that are used to determine TAs, the different time-frequency resources may be different time domain resources, different frequency domain resources, or different time domain resources and frequency domain resources. This is not limited in this application.

In a non-terrestrial network (non-terrestrial network, NTN), a ground station may also be referred to as a gateway. A method provided in this application may be applied to an NTN system, or may be applied to a terrestrial communication system. This is not limited in this application. When the method provided in this application is applied to the terrestrial communication system, the ground station may be replaced with a network device. The network device may be a base station (base station), an evolved NodeB (evolved NodeB, eNodeB), an access point (access point, AP), a transmission reception point (transmission reception point, TRP), a next generation NodeB (next generation NodeB, gNB), a base station in a future communication system, an access node in a wireless fidelity (wireless fidelity, Wi-Fi) system, or the like. A type of the network device is not limited in this application.

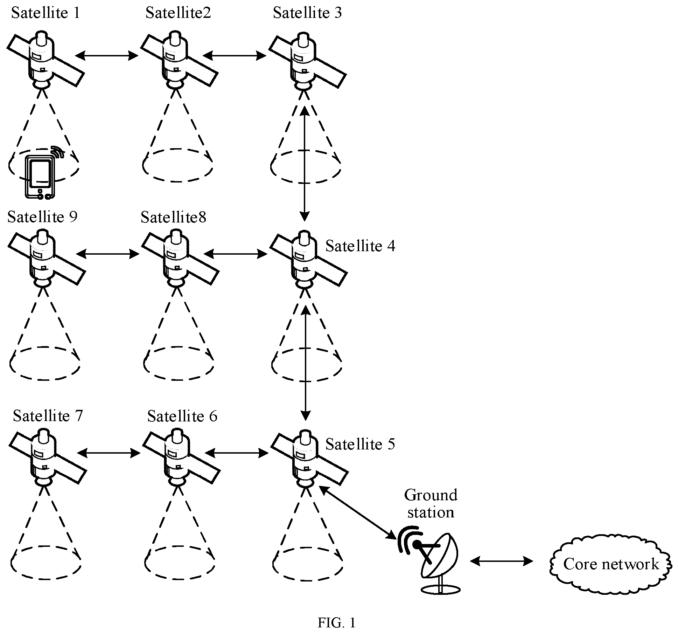

To better understand the method provided in this application, the following briefly describes terms in this application.
1. NTN: The NTN may be considered as a supplement to a terrestrial communication network or an independent communication system that provides global high-speed network access for users. An NTN system may include, for example, apparatuses such as a terminal, a ground station, a base station, and a satellite.
2. Inter-satellite forwarding network: A terminal forwards data to a ground station through an inter-satellite link (a link between satellites). The following describes inter-satellite forwarding in detail with reference to FIG. 1.

FIG. 1 is a diagram of an inter-satellite forwarding network according to an embodiment of this application.

As shown in FIG. 1, a terminal forwards data to a ground station through an inter-satellite link. For example, the data from the terminal passes through a satellite 1, a satellite 2, a satellite 3, a satellite 4, and a satellite 5 in sequence, and is finally forwarded to the ground station. It can be learned from FIG. 1 that a satellite closer to the ground station needs to forward more data. For example, the satellite 5 is closer to the ground station than the satellite 4, and the satellite 5 forwards more data than the satellite 4; therefore, inter-satellite forwarding pressure is high. In addition, due to satellite movement, different satellites become satellites closer to the ground station in sequence. Therefore, most satellites need to support maximum-capacity inter-satellite forwarding, leading to high satellite hardware costs.

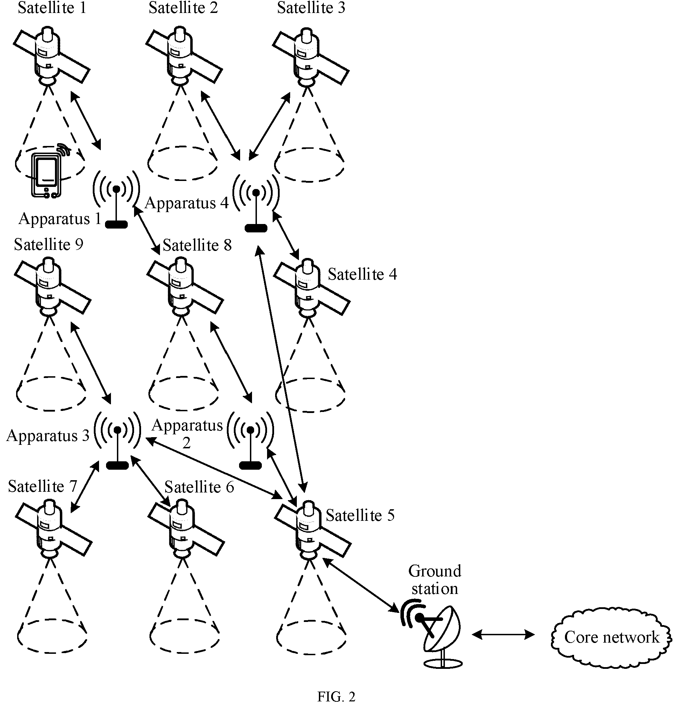

3. Satellite-to-ground forwarding network: To reduce inter-satellite forwarding pressure and satellite hardware costs, satellite-to-ground forwarding may be performed. In other words, a signal transmitted between a terminal and a ground station/base station may be forwarded through a satellite and an apparatus deployed on the ground. The following describes satellite-to-ground forwarding in detail with reference to FIG. 2.

FIG. 2 is a diagram of a satellite-to-ground forwarding network according to an embodiment of this application.

As shown in FIG. 2, a signal transmitted between a terminal and a ground station may be forwarded through a satellite and an apparatus deployed on the ground. Both the satellite and the apparatus deployed on the ground may each be considered as a forwarding node, for example, may each be an NCTN or an NCRN. The NCTN has a function of an amplify-and-forward (amplify-and-forward, AF) relay. After receiving a signal, the amplify-and-forward relay directly forwards the received signal to a next-hop node without decoding or encoding the signal. The NCRN (which may also be referred to as a digital forwarding node) has a function of a decode-and-forward (decode-and-forward, DF) relay. After receiving a signal, the decode-and-forward relay decodes the signal, re-encodes a decoding result, and forwards a re-encoded signal to a next-hop node. For example, as shown in FIG. 2, data from the terminal apparatus may pass through a satellite 1, an apparatus 1, a satellite 8, an apparatus 2, and a satellite 5 in sequence, and may be finally forwarded to the ground station.

In this application, the satellite and the apparatus deployed on the ground may be collectively referred to as relay apparatuses, and are configured to forward a signal between the terminal apparatus and the ground station.

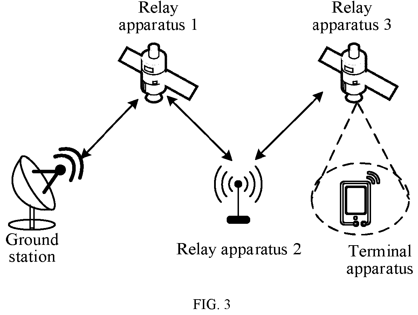

FIG. 3 is another diagram of a satellite-to-ground forwarding network according to an embodiment of this application. In the satellite-to-ground forwarding network shown in FIG. 3, an example in which three relay apparatuses are deployed between a terminal apparatus and a ground station is used. However, this should not constitute any limitation on this application. For example, more or fewer relay apparatuses may be deployed between the terminal apparatus and the ground station.

As shown in FIG. 3, a signal between the terminal apparatus and the ground station may be forwarded through the three relay apparatuses (for example, a relay apparatus 1, a relay apparatus 2, and a relay apparatus 3), where the three relay apparatuses include a satellite and an apparatus deployed on the ground. The relay apparatus shown in FIG. 3 may be an amplify-and-forward relay, or may be a decode-and-forward relay. This is not limited in this application.

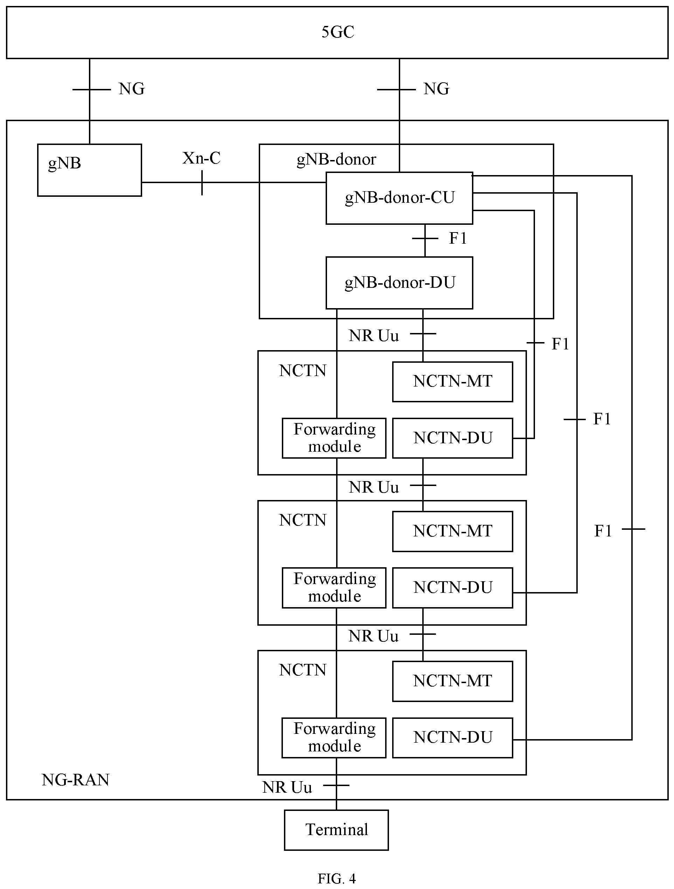

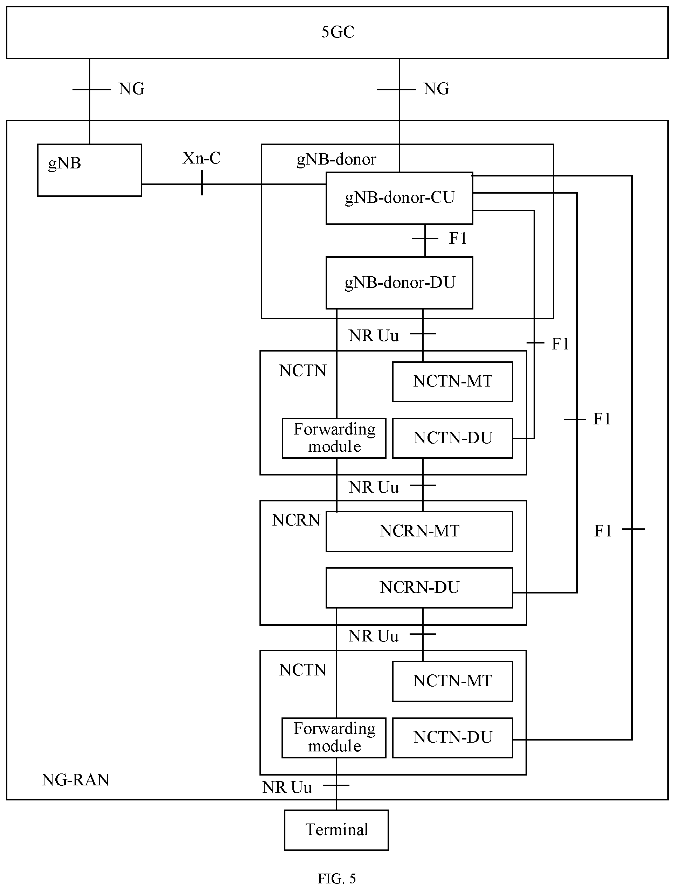

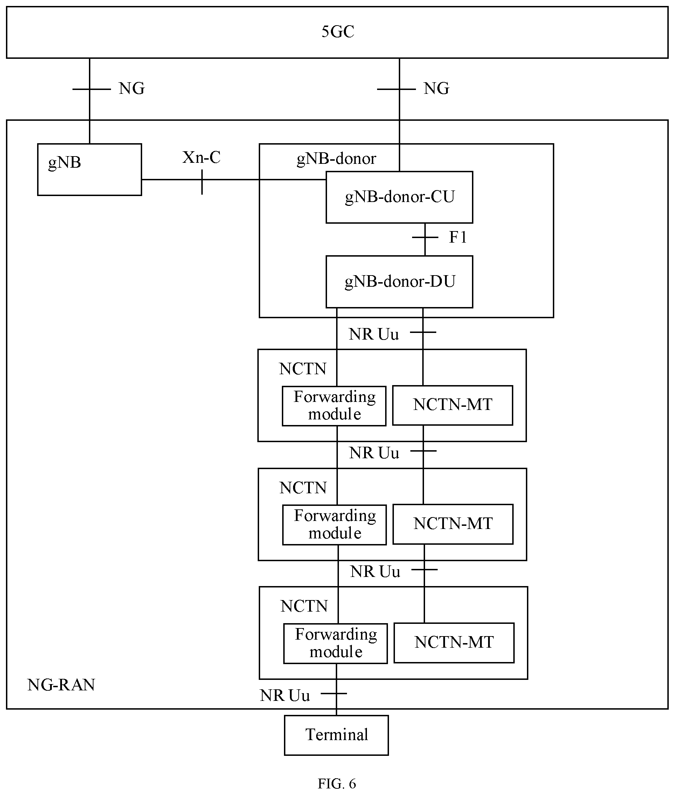

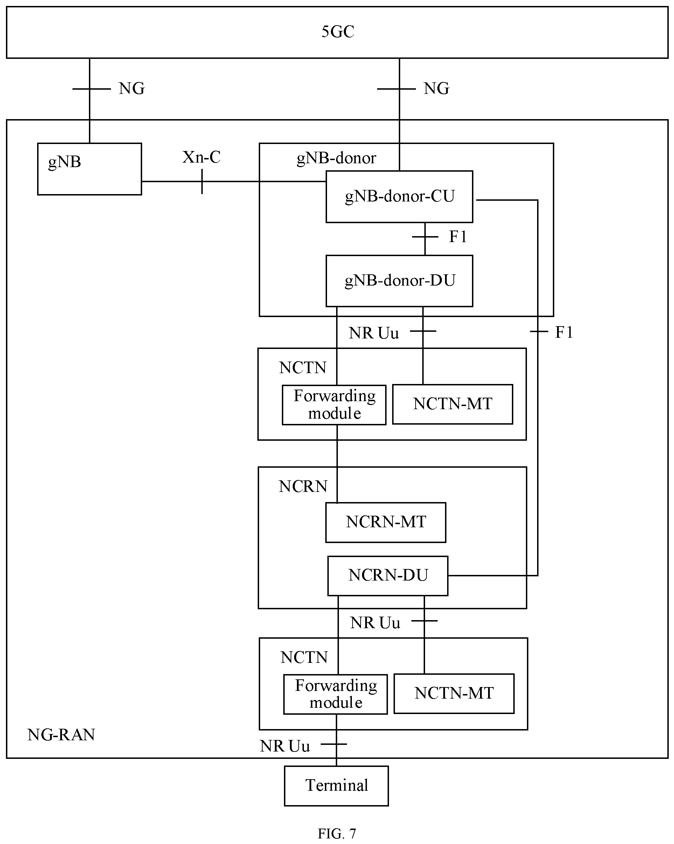

The following describes in detail an architecture of the satellite-to-ground forwarding network shown in FIG. 3 with reference to FIG. 4 to FIG. 7. In satellite-to-ground forwarding networks shown in FIG. 4 and FIG. 6, an example in which a plurality of forwarding nodes between a ground station and a terminal apparatus are all NCTNs is used. In satellite-to-ground forwarding networks shown in FIG. 5 and FIG. 7, a plurality of forwarding nodes between a ground station and a terminal apparatus include an NCTN and an NCRN.

FIG. 4 is a diagram of an architecture of a satellite-to-ground forwarding network according to an embodiment of this application.

As shown in FIG. 4, the satellite-to-ground forwarding network includes a 5th generation core network (5th generation core network, 5GC), a next generation (next generation, NG)-radio access network (radio access network, RAN), and a terminal. The NG-RAN includes a ground station (where a gNB is used as an example) and one or more NCTNs (where three NCTNs are used as an example in the figure). The one or more NCTNs have a function of an amplify-and-forward relay. To be specific, after receiving a signal, the one or more forwarding nodes directly forward the received signal to a next-hop node without decoding or encoding the signal.

The gNB is connected to a gNB-donor (donor). The gNB-donor includes a gNB-donor-central unit (central unit, CU) and one or more gNB-donor-distributed units (distributed units, DUs).

Each NCTN includes an NCTN-mobile termination (mobile termination, MT), an NCTN-DU, and a forwarding (forwarding) module, where the MT has a function similar to that of a UE, communicates with a parent node through a Uu interface, and provides data backhaul. The NCTN-DU has a function similar to that of a DU in the gNB, communicates with a child node, and provides an access service for the child node. The forwarding module is configured to amplify and forward uplink/downlink radio frequency signals (which is also referred to as transparent forwarding).

The NCTN-MT may be used as a common UE to connect to a DU or an NCTN-DU of a parent node of the NCTN-MT, or may be used as a control link to send signaling information for backhaul control, control link/access link (control link/access link) beam direction information, signaling information for switching forwarding transmission, routing related information, or the like. The NCTN-DU may provide access for a lower-level NCTN-MT/NCRN-MT, and establish a lower-level control link. The NCTN is connected to a previous-hop NCTN or gNB-donor-DU by using a mobile termination function of an NR Uu interface. The NCTN provides wireless backhaul for a next-hop NCTN and the terminal by using a DU function through the NR Uu interface. NG, NR Uu, Xn-C, and F1 in the figure are all logical interfaces. Functions of these interfaces are not described one by one in detail herein.

FIG. 5 is a diagram of another architecture of a satellite-to-ground forwarding network according to an embodiment of this application.

As shown in FIG. 5, a difference from FIG. 4 lies in that forwarding nodes configured to forward a signal between a ground station and a terminal apparatus include an NCTN and an NCRN. A difference between the NCRN and the NCTN lies in that the NCRN includes an NCRN-MT and an NCRN-DU, and the NCTN includes an NCTN-MT, an NCTN-DU, and a forwarding module. The NCRN does not have a backhaul adaptation protocol (backhaul adaptation protocol, BAP) layer. For example, routing information is carried in a media access control (media access control, MAC) layer. The NCRN-MT may be used as a common UE to connect to a DU/an NCTN-DU/an NCRN-DU of a parent node of the NCRN-MT, or may be used as a control link and a wireless backhaul link (to provide a digital forwarding function and support radio link control (radio link control, RLC) layer forwarding). The NCRN-DU may provide access for a lower-level NCTN-MT/NCRN-MT/UE. For detailed descriptions of the satellite-to-ground forwarding network in FIG. 5, refer to FIG. 4. Details are not described herein again.

FIG. 6 is a diagram of still another architecture of a satellite-to-ground forwarding network according to an embodiment of this application.

As shown in FIG. 6, a difference from FIG. 4 lies in that an NCTN has fewer functions (for example, does not have a function of an NCTN-DU), that is, the NCTN includes an NCTN-MT and a forwarding module. For detailed descriptions of the satellite-to-ground forwarding network in FIG. 6, refer to FIG. 4. Details are not described herein again.

FIG. 7 is a diagram of yet another architecture of a satellite-to-ground forwarding network according to an embodiment of this application.

As shown in FIG. 7, a difference from FIG. 5 lies in that an NCTN has fewer functions (for example, does not have a function of an NCTN-DU), that is, the NCTN includes an NCTN-MT and a forwarding module. For detailed descriptions of the satellite-to-ground forwarding network in FIG. 7, refer to FIG. 4. Details are not described herein again.

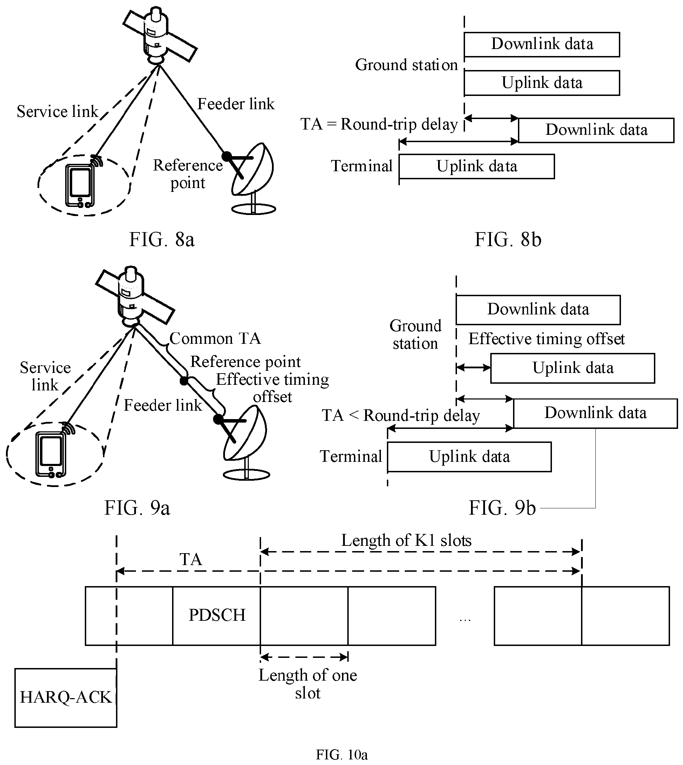

4. TA and common TA: The TA refers to time by which a terminal needs to advance sending of an uplink data frame relative to a corresponding downlink data frame. Because there is a specific distance between the terminal and a base station (an example of a network device), there is a delay when an uplink data frame sent by the terminal arrives at the base station. To ensure that the uplink data frame of the terminal and a downlink data frame of the base station are synchronized at the base station or ensure that uplink data frames sent by a plurality of terminals are synchronized at the base station, the base station needs to indicate a TA related parameter to the terminal, and the terminal sends uplink data based on a TA, where the TA reflects a round-trip transmission delay of a signal between the terminal and the base station (which may be referred to as a round-trip delay for short). The following explains the TA in detail with reference to FIG. 8a and FIG. 8b and FIG. 9a and FIG. 9b.

FIG. 8a and FIG. 8b are diagrams of an uplink data frame and a downlink data frame according to an embodiment of this application.

As shown in FIG. 8a, a link between a satellite and a terminal is referred to as a service link (service link), and a link between the satellite and a ground station is referred to as a feeder link (feeder link). FIG. 8a shows a scenario in which a reference point is on the ground station. A round-trip delay between the reference point and the ground station is compensated for by the ground station, and a round-trip delay between the reference point and the satellite and a round-trip delay between the satellite and the terminal are compensated for by the terminal. In other words, a TA corresponding to the terminal may be a sum of the round-trip delay between the reference point and the satellite and the round-trip delay between the satellite and the terminal. A distance between the reference point and the satellite is a common transmission distance of all terminals in a coverage area of the satellite. Correspondingly, a common round-trip transmission delay is generated when round-trip transmission is performed based on the common transmission distance, and the common round-trip transmission delay is denoted as a common TA. In other words, common TAs of a plurality of terminals in a same coverage area may be the same. The common TA may be related to a type of a satellite communication system and the distance between the satellite or the ground station and the reference point.

As shown in FIG. 8b, an uplink data frame sent by a terminal is transmitted before a downlink data frame corresponding to the terminal, and time by which transmission of the uplink data frame is advanced relative to the downlink data frame is denoted as a TA, where the TA reflects a round-trip transmission delay of a signal between the terminal and a ground station. In this way, when the ground station receives the uplink data frame, a boundary of the uplink data frame is exactly aligned with a boundary of the downlink data frame. In this way, the TA may be used to keep the uplink data frame of the terminal and a downlink data frame of the ground station synchronized at the base station.

FIG. 9a and FIG. 9b are other diagrams of an uplink data frame and a downlink data frame according to an embodiment of this application.

As shown in FIG. 9a, a difference from FIG. 8a lies in that a reference point is between a satellite and a ground station, that is, the reference point is on a feeder link. A round-trip delay between the reference point and the ground station is compensated for by the ground station, and a round-trip delay between the reference point and the satellite and a round-trip delay between the satellite and a terminal are compensated for by the terminal. For descriptions of a common TA, refer to the explanations in FIG. 8a. Details are not described herein again.

As shown in FIG. 9b, an uplink data frame sent by a terminal is transmitted before a downlink data frame corresponding to the terminal, and time by which transmission of the uplink data frame is advanced relative to the downlink data frame is denoted as a TA. A round-trip delay between a reference point and a ground station is compensated for by the ground station. In other words, for the ground station, arrival time of the uplink data frame is later than sending time of the downlink data frame (with a same frame number), and a time difference (that is, an effective timing offset in the figure) between the arrival time of the uplink data frame and the sending time of the downlink data frame is indicated by the ground station. Therefore, a TA corresponding to the terminal is less than a round-trip transmission delay of the signal between the terminal and the ground station.

5. Scheduling offset (denoted as Koffset): The scheduling offset is configured by a base station (an example of a network device) for a terminal, and the scheduling offset may be carried in a broadcast message (for example, a system information block (system information block, SIB) 19). In network communication, there may be an insufficient scheduling delay for uplink data of a base station or an insufficient feedback delay configured by the base station for a terminal. Therefore, a scheduling offset may be introduced. The following briefly describes possible scenarios to which the scheduling offset is applicable. For more detailed explanations, refer to the 3GPP 38.331 protocol. Details are not described herein.

Scenario 1: Scenario in which a base station sends physical downlink shared channel (physical downlink shared channel, PDSCH) data (data carried on a PDSCH), and correspondingly, a terminal receives the PDSCH data, and feeds back an acknowledgement (acknowledgement, ACK) or a negative acknowledgement (negative acknowledgement, NACK) after receiving the PDSCH data, where the ACK may be, for example, a hybrid automatic repeat request (hybrid automatic repeat request, HARQ)-ACK, and the NACK may be, for example, a HARQ-NACK:

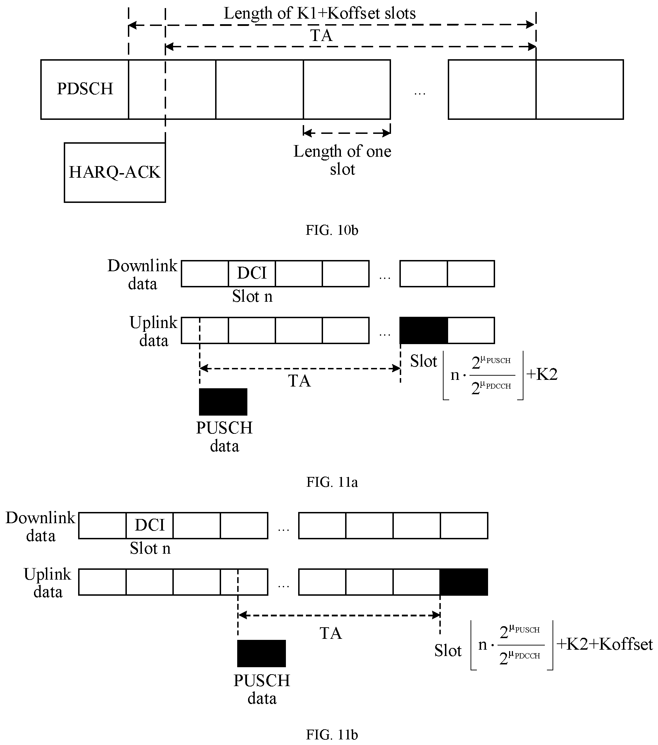

FIG. 10a and FIG. 10b are diagrams of a scenario to which a scheduling offset is applicable according to an embodiment of this application. In FIG. 10a and FIG. 10b, an example in which a terminal feeds back a HARQ-ACK is used. However, this should not constitute any limitation on this application. For example, the terminal may also feed back a HARQ-NACK.

As shown in FIG. 10a, after receiving PDSCH data sent by a base station, the terminal needs to send a HARQ-ACK or a HARQ-NACK, to feed back whether the PDSCH data is successfully decoded (where in the figure, an example in which the HARQ-ACK is fed back is used). Assuming that the terminal receives the PDSCH data in a downlink slot (slot) n, the terminal needs to feed back the HARQ-ACK in an uplink slot n+K1. A maximum amount of timing advance adjustment that can be performed by the terminal is a length of K1-1 slots. Currently, a maximum value of K1 is 15. When a subcarrier spacing (subcarrier spacing, SCS) is 15 kilohertz (kilohertz, kHz), and a length of one slot is 1 millisecond (millisecond, ms), the maximum amount of timing advance adjustment that can be performed by the terminal is 14 ms. A round-trip delay between a ground station and the terminal in an NTN is generally greater than 14 ms, that is, the terminal needs to perform timing advance adjustment whose amount is greater than 14 ms on uplink data. It can be learned from FIG. 10a that an amount of timing advance adjustment for sending the uplink data by the terminal is greater than a length of K1-1 slots. Therefore, the length of the K1-1 slots cannot provide a sufficient time length for the terminal to perform timing advance adjustment, and cannot meet a requirement of the terminal for compensation for a round-trip delay in an NTN scenario.

Therefore, the scheduling offset may be introduced, so that there is a sufficient time length between the time at which the terminal receives the PDSCH data and the time at which the terminal sends the HARQ-ACK to perform timing advance adjustment.

As shown in FIG. 10b, the terminal sends the HARQ-ACK in a slot n+K1+Koffset. Correspondingly, the base station receives the HARQ-ACK in the uplink slot n+K1+Koffset. Koffset is introduced to adjust the slot occupied by the terminal to send the HARQ-ACK, so as to increase a scheduling delay for the terminal to feed back the HARQ-ACK, and provide a sufficient time length for the terminal to perform timing advance adjustment.

Scenario 2: Scenario in which physical uplink shared channel (physical uplink shared channel, PUSCH) data is scheduled based on downlink control information (downlink control information, DCI):
FIG. 11a and FIG. 11b are diagrams of another scenario to which a scheduling offset is applicable according to an embodiment of this application.

As shown in FIG. 11a, after receiving DCI in a downlink slot n, a terminal needs to send PUSCH data in an uplink slot $\left⌊n⋅\frac{{2}^{{μ}_{PUSCH}}}{{2}^{{μ}_{PDCCH}}}\right⌋ + K 2 ⋅ {μ}_{PUSCH}$ is related to a subcarrier spacing corresponding to a PUSCH, and µ_{PDCCH} is related to a subcarrier spacing corresponding to a physical downlink control channel (physical downlink control channel, PDCCH). For example, the subcarrier spacing corresponding to the PUSCH = 2^{µ_{PUSCH}} * 15 kHz, and the subcarrier spacing corresponding to the PDCCH = 2^{µ_{PDCCH}} * 15 kHz. A maximum amount of timing advance adjustment that can be performed by the terminal is a length of K2-1 slots. Currently, a value of K2 ranges from 0 to 32. A length of K2 slots varies with an uplink subcarrier spacing. As shown in Table 1, when the SCS = 15 kHz, a maximum length of the K2 slots is 32 ms. According to the foregoing analysis, the maximum amount of timing advance adjustment that can be performed on the PUSCH data sent by the terminal and scheduled by the DCI is 32 ms. For a geostationary earth orbit (geostationary earth orbit, GEO) scenario, a maximum round-trip delay between a ground station and the terminal is 541.46 ms, and the length of the K2-1 slots cannot provide a sufficient time length for the terminal to perform timing advance adjustment. Similarly, for a low earth orbit (low earth orbit, LEO)-1200 scenario, when the subcarrier spacing is 30 kHz, the maximum length of the K2 slots is 16 ms. However, in the LEO-1200 scenario, a maximum round-trip delay between the ground station and the terminal is greater than 20 ms. Therefore, the length of the K2-1 slots cannot provide a sufficient time length for the terminal to perform timing advance adjustment.

**Table 1**

| Subcarrier spacing | Maximum length of K2 slots |
|---|---|
| 15 kHz | 32 ms |
| 30 kHz | 16 ms |
| 60 kHz | 8 ms |
| 120 kHz | 4 ms |

Therefore, Koffset may be introduced, so that there is a sufficient time length between the time at which the terminal receives the downlink DCI and the time at which the terminal sends the PUSCH data, and there is a sufficient time length for the terminal to perform timing advance adjustment.

As shown in FIG. 11b, a terminal sends PUSCH data in an uplink slot $\left⌊n⋅\frac{{2}^{{μ}_{PUSCH}}}{{2}^{{μ}_{PDCCH}}}\right⌋ + K 2 + Koffset$. Correspondingly, a base station receives the PUSCH data in the uplink slot $\left⌊n⋅\frac{{2}^{{μ}_{PUSCH}}}{{2}^{{μ}_{PDCCH}}}\right⌋ + K 2 + Koffset$. Koffset is introduced to adjust the slot occupied by the terminal to send the PUSCH data, so as to increase a scheduling delay for the terminal to send the PUSCH data, and provide a sufficient time length for the terminal to perform timing advance adjustment.

Optionally, if the terminal receives DCI in a downlink slot n, the terminal sends the PUSCH data in an uplink slot $\left⌊n⋅\frac{{2}^{{μ}_{PUSCH}}}{{2}^{{μ}_{PDCCH}}}\right⌋ + K 2 + Koffset ⋅ \frac{{2}^{{μ}_{PUSCH}}}{{2}^{{μ}_{Koffset}}} ⋅ \frac{{2}^{{μ}_{PUSCH}}}{{2}^{{μ}_{PDCCH}}}$ and $\frac{{2}^{{μ}_{PUSCH}}}{{2}^{{μ}_{Koffset}}}$ are adjusted due to different time units. µ_{PUSCH} and µ_{PDCCH} are related to subcarrier spacings of a PUSCH and a PDCCH, that is, the subcarrier spacing of the PUSCH = 2 ^{µ_{PUSCH}} * 15 kHz, and the subcarrier spacing of the PDCCH = 2 ^{µ_{PDCCH}} * 15 kHz.

Scenario 3: Scenario in which PUSCH data is scheduled based on a configured grant (configured grant) (for example, a configured grant type 2 (configured grant type 2)):
After receiving an uplink grant message configured by a base station, a terminal sends PUSCH data on a corresponding resource by using Koffset. For example, the terminal sends the PUSCH data on a 1^{st} PUSCH transmission occasion after a time length corresponding to Koffset following the reception of the uplink grant message. For example, if the terminal receives the uplink grant message in a slot n, the terminal may send the PUSCH data on a 1^{st} PUSCH transmission occasion after an uplink slot n+Koffset.

Scenario 4: Scenario in which PUSCH data is scheduled by using a random access response (random access response, RAR) grant:
In a four-step random access procedure, if a terminal receives a RAR message in a downlink slot n, the terminal may send PUSCH data (that is, a message 3 (message 3, Msg3)) in a slot n + k 2 + Δ + 2^{u} · K offset. u^{u} is used to convert a time length represented by Koffset based on a difference between downlink and uplink slot lengths (for example, based on a difference between subcarrier spacings). In the standard, a time unit used by Koffset is defined as a slot length (that is, 1 ms) when a subcarrier spacing = 15 kHz. Therefore, u is related to the subcarrier spacing for sending the uplink signal. For example, the subcarrier spacing for the uplink signal = 2^{u} * 15 kHz. Δ is predefined in a protocol.

In a two-step random access procedure, the terminal sends a message A (message A, MsgA) to a base station. If the base station fails to decode all messages A (for example, only a preamble is successfully decoded), the base station sends a fallback RAR (fallback RAR) message to the terminal. After receiving the fallback RAR message, the terminal needs to send, on a PUSCH, a Msg3 for random access that is scheduled by using the fallback RAR message, and Koffset may also be introduced into a slot occupied when the Msg3 is sent.

Scenario 5: Scenario in which channel state information (channel state information, CSI) is transmitted on a PUSCH:
When receiving DCI (where the DCI is used to request CSI) in a downlink slot n, a terminal may send the CSI in an uplink slot n+K+Koffset, where the CSI is transmitted on a PUSCH. K is determined based on the DCI.

Scenario 6: Scenario in which a network device configures a resource used to carry CSI:
If a terminal needs to send a CSI measurement report in an uplink slot n', a base station needs to configure, for the terminal in a downlink slot n-n_{CSI_ref}-Koffset, a resource used to carry CSI. $n = \left⌊n′⋅\frac{{2}^{{μ}_{PUSCH}}}{{2}^{{μ}_{PDCCH}}}\right⌋$, n_{CSI_ref} is predefined in a protocol, and n_{CSI_ref} is related to a type of the CSI measurement report.

Scenario 7: Scenario in which a terminal sends an aperiodic sounding reference signal (sounding reference signals, SRS):
After receiving, in a downlink slot n, DCI for triggering an aperiodic SRS, a terminal may send the SRS in an uplink slot $\left⌊n⋅{2}^{\frac{{μ}_{SRS}}{{}^{P μ DCCH}}}\right⌋ + k + Koffset$. k is configured by a base station, µ_{SRS} is related to a subcarrier spacing for sending the SRS, and µ_{PDCCH} is related to a subcarrier spacing of a PDCCH.

Scenario 8: Scenario in which a random access procedure is triggered by using a command carried on a PDCCH (which is referred to as a PDCCH command for short):
A base station indicates a random access occasion to or configures a random access occasion for a terminal by using a PDCCH command, and the terminal determines a next available random access occasion based on the indication. The terminal sends a random access signal (for example, a random access preamble) on a next available random access occasion after a time length corresponding to Koffset (that is, after a length of Koffset slots if a length of an uplink slot is used as a unit) following the reception of the last symbol (symbol) of the PDCCH command.

It should be noted that in this application, an example in which a time unit of Koffset is based on a length of a slot (an uplink slot/a downlink slot) is used for description. However, this should not constitute any limitation on this application. Koffset may alternatively use another unit (for example, ms as a unit). If Koffset uses another unit, related descriptions of Koffset in the foregoing scenarios also need to be adaptively modified. If Koffset uses another unit, Koffset only needs to be converted into a corresponding slot length unit. Alternatively, another parameter indicating a slot length may be converted into a time unit that is the same as that of Koffset.

6. Effective timing offset (denoted as Kmac): The effective timing offset indicates an offset between a downlink frame timing and an uplink frame timing of a ground station. The following describes in detail a scenario to which Kmac is applicable with reference to the accompanying drawings.

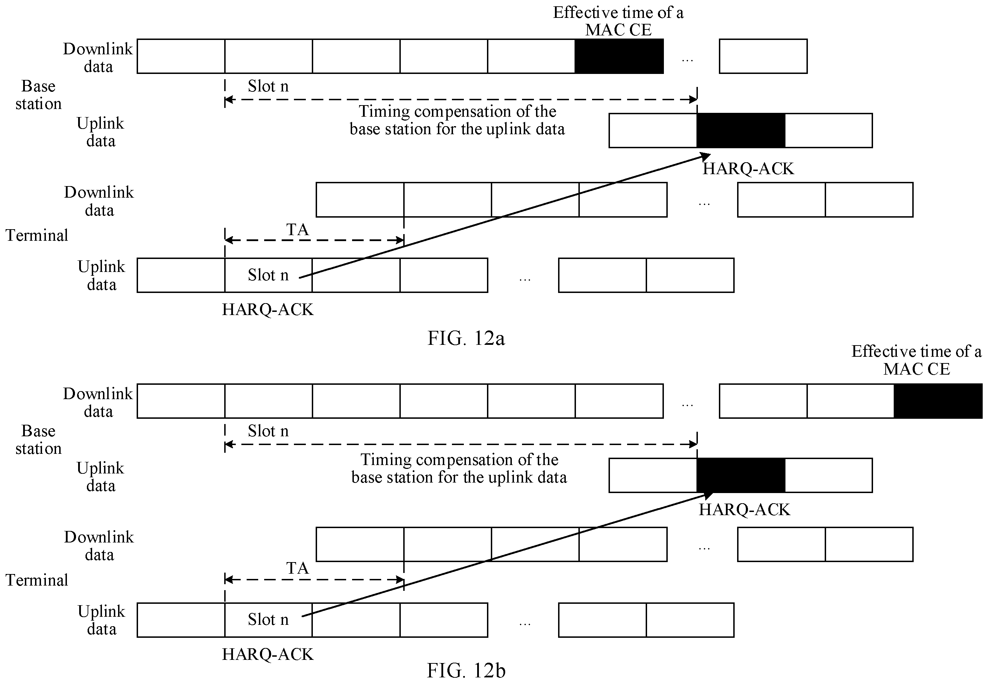

FIG. 12a and FIG. 12b are diagrams of a scenario to which an effective timing offset is applicable according to an embodiment of this application.

As shown in FIG. 12a, a ground station receives a HARQ-ACK in an uplink slot n, where the HARQ-ACK is a feedback for a PDSCH carrying a media access control (media access control, MAC) control element (control element, CE), the MAC CE is used to configure a downlink signal, and it is assumed that a terminal brings the configuration of the downlink signal into effect in a 1^{st} slot after a downlink slot $n + {XN}_{slot}^{subframe , μ}$, for example, in a slot $n + {3 N}_{slot}^{subframe , μ} + 1$. ${N}_{slot}^{subframe , μ}$ is a quantity of slots included in one subframe (subframe) when a subcarrier spacing is 2^{µ} * 15 kHz, and X is a nonnegative integer agreed in a protocol or configured by using a parameter. In FIG. 12a and FIG. 12b, X = 3 is used as an example. When an amount of timing compensation of the ground station for the uplink data is greater than or equal to ${3 N}_{slot}^{subframe , μ}$, the time at which the ground station receives a HARQ-ACK or a HARQ-NACK from the terminal is not earlier than effective time of the configuration of the downlink signal, that is, later than or equal to the effective time of the configuration of the downlink signal. In this case, the ground station cannot know in time whether the terminal correctly decodes the MAC CE. In other words, when the configuration of the downlink signal performed by using the MAC CE takes effect, the ground station has not received the HARQ-ACK or the HARQ-NACK fed back by the terminal. However, after sending the HARQ-ACK or the HARQ-NACK in the slot n, the terminal considers that the configuration of the downlink signal takes effect from the downlink slot $n + {3 N}_{slot}^{subframe , μ} + 1$. As a result, the terminal and the ground station have different understandings of the effective time, causing a communication conflict.

Therefore, Kmac may be introduced. As shown in FIG. 12b, it is assumed that the terminal brings the configuration of the downlink signal into effect in a 1^{st} slot after a downlink slot $n + {3 N}_{slot}^{subframe , μ} + Kmac$, namely, in a slot $n + {3 N}_{slot}^{subframe , μ} + Kmac + 1$. It can be learned that, after Kmac is used, the configuration of the downlink signal takes effect after the ground station receives the HARQ-ACK or the HARQ-NACK sent by the terminal. The effective time of the configuration of the downlink signal is prolonged, to ensure that the configuration of the downlink signal takes effect only after the ground station receives the HARQ-ACK or the HARQ-NACK.

Currently, the ground station broadcasts a related parameter used to calculate a TA, for example, an ephemeris (indicating a location of a satellite), a common TA, a common TA drift, a common TA drift variant, or a TA offset. The terminal determines, based on a location of the terminal and the received TA related parameter, a TA corresponding to the terminal, and the terminal may perform uplink transmission based on the TA. The TA satisfies the following formula: $TA = \left({N}_{TA}+{N}_{TA , offset}+{N}_{TA , adj}^{common}+{N}_{TA , adj}^{UE}\right) {T}_{C}$, where N_{TA} is a timing advance adjustment amount sent by the ground station or the base station to the terminal, and N_{TA}=0 during initial access. N_{TA,offset} is a TA offset configured by the ground station for the terminal. ${N}_{TA , adj}^{common}$ is determined by the terminal based on a common TA configured by the ground station, a common TA drift, and a common TA drift variant. ${N}_{TA , adj}^{UE}$ is determined by the terminal based on the location of the terminal and an ephemeris broadcast by the base station. T_{C} indicates a time unit, T_{C}=1/(Δfₘₐₓ · N_{f}), Δfₘₐₓ =480×10³ Hz, and N =4096.

In a satellite-to-ground forwarding network, when relay apparatuses access a ground station or a base station as terminals, the relay apparatuses need to determine TAs corresponding to the relay apparatuses, and the relay apparatuses may access different cells. For example, the relay apparatuses are located in different coverage areas, and one coverage area corresponds to one cell. Therefore, parameters used to determine the TAs may be different. In this way, for different cells, the ground station must occupy different time-frequency resources to broadcast cell-specific parameters and that are used to determine the TAs, easily causing resource waste.

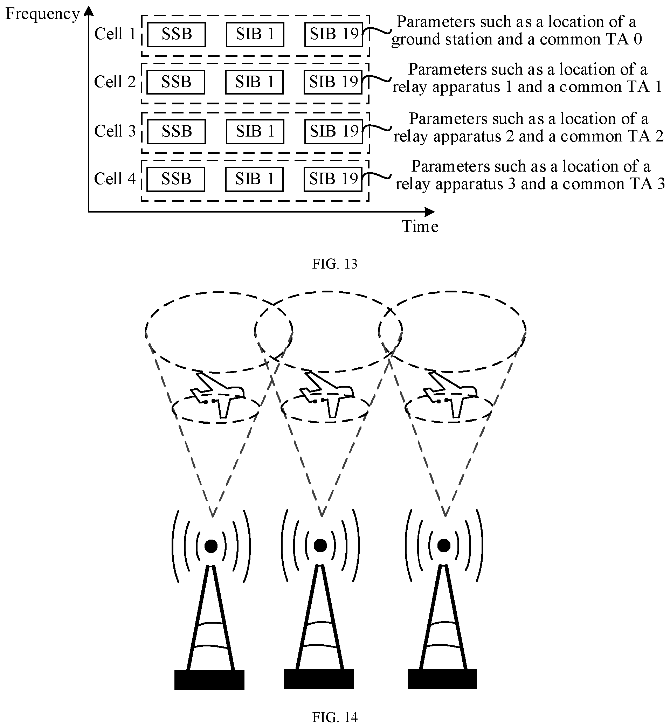

FIG. 13 is a diagram of broadcasting a parameter used to determine a TA in each cell according to an embodiment of this application. In FIG. 13, using the system shown in FIG. 3 as an example, relay apparatuses configured to forward a signal between a ground station and a terminal apparatus include, for example, a relay apparatus 1, a relay apparatus 2, and a relay apparatus 3. The relay apparatus 1, the relay apparatus 2, the relay apparatus 3, and the terminal apparatus access different cells. For example, the relay apparatus 1, the relay apparatus 2, the relay apparatus 3, and the terminal apparatus are located in different coverage areas, and one coverage area corresponds to one cell. Therefore, parameters that are received by the relay apparatuses and the terminal apparatus and that are used to determine TAs may be different. For example, common timing advances, and location parameters (coordinate information or ephemeris information) of a network device that provides a service for the relay apparatuses or the terminal apparatus, may be different. Similarly, Koffset may also be different, and Kmac may also be different.

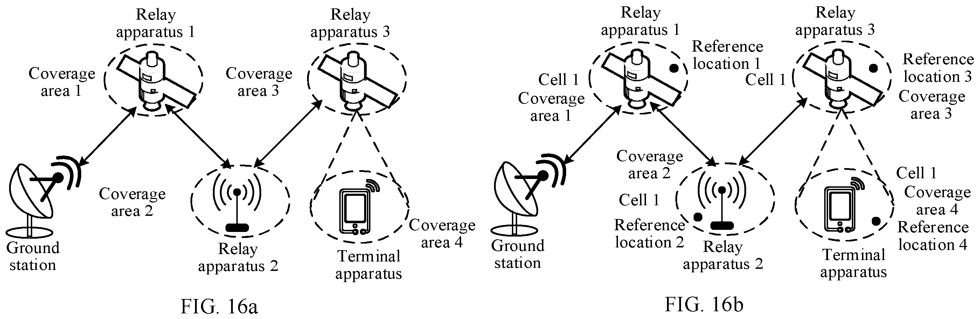

As shown in FIG. 13, it is assumed that the relay apparatus 1 accesses a cell 1 (an area served by the ground station), the relay apparatus 2 accesses a cell 2 (an area served by a forwarded signal of the relay apparatus 1), the relay apparatus 3 accesses a cell 3 (an area served by a forwarded signal of the relay apparatus 2), and the terminal apparatus accesses a cell 4 (an area served by a forwarded signal of the relay apparatus 3). For example, as shown in FIG. 16a, the cell 1 corresponds to a coverage area 1, and the relay apparatus 1 is located in the coverage area 1; the cell 2 corresponds to a coverage area 2, and the relay apparatus 2 is located in the coverage area 2; the cell 3 corresponds to a coverage area 3, and the relay apparatus 3 is located in the coverage area 3; and the cell 4 corresponds to a coverage area 4, and the terminal apparatus is located in the coverage area 4. Herein, different coverage areas may be different cells. For different cells, the ground station occupies different time-frequency resources to broadcast parameters that correspond to the cells and that are used to determine TAs. More specifically, parameters corresponding to the cell 1 include parameters such as a location of the ground station and a common TA 0, parameters corresponding to the cell 2 include parameters such as a location of the relay apparatus 1 and a common TA 1, parameters corresponding to the cell 3 include parameters such as a location of the relay apparatus 2 and a common TA 2, and parameters corresponding to the cell 4 include parameters such as a location of the relay apparatus 3 and a common TA 3. For different cells, the ground station needs to occupy different time-frequency resources to broadcast parameters that correspond to the cells and that are used to determine TAs, easily causing resource waste.

To reduce resource waste, this application provides a communication method. A plurality of parameter sets corresponding to a plurality of communication apparatuses are carried in a broadcast message of a same cell, in other words, the plurality of parameter sets may be broadcast in the broadcast message of the same cell. The plurality of parameter sets are broadcast by using a time-frequency resource corresponding to the cell. The ground station does not need to separately occupy different time-frequency resources for the communication apparatuses to broadcast the parameter sets corresponding to the communication apparatuses. This helps reduce resource waste.

It should be noted that, in this application, when a satellite operates in a transparent (transparent) mode, the satellite has a transparent forwarding function of a relay apparatus. When a ground station (also referred to as a gateway) has a function of a base station or some functions of the base station, the gateway or the ground station may be considered as a base station. Alternatively, if the base station and the gateway may be separately deployed, a delay on a feeder link includes two parts: a delay from the satellite to the gateway and a delay from the gateway to the base station. The following uses a case in which the gateway and the base station are deployed together or are located close to each other as an example. If the gateway is far away from the base station, the delay on the feeder link is a sum of the delay from the satellite to the gateway and the delay from the gateway to the base station. When the satellite operates in a regenerative (regenerative) mode, the satellite has a data processing capability and has functions of a base station or some functions of the base station. In this case, the satellite may be considered as a base station. In addition, the base station is connected to a core network. Alternatively, the satellite has a decoding and forwarding function.

FIG. 14 is a diagram of an air-to-ground communication scenario according to an embodiment of this application.

As shown in FIG. 14, this application is also applicable to an air-to-ground (air-to-ground, ATG) communication scenario. A network device includes a ground base station, and a user terminal includes a high-altitude aircraft, an on-board handheld terminal, or the like.

It should be understood that the scenarios shown in this application are merely examples, and should not constitute any limitation on this application.

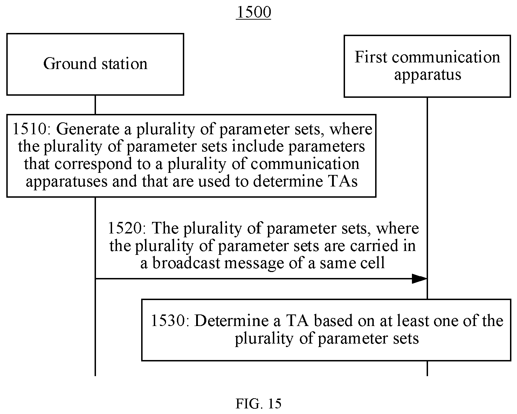

The following describes in detail the communication method provided in this application with reference to the accompanying drawings. FIG. 15 is a schematic flowchart of a communication method 1500 according to an embodiment of this application. In FIG. 15, the method is described merely by using interaction between a ground station and a first communication apparatus as an example. This should not constitute any limitation on this application. The ground station in FIG. 15 may be replaced with a component (for example, a chip, a chip system, or a processor) disposed in the ground station, or a logical module, software, or the like that can implement all or some functions of the ground station. The first communication apparatus may be replaced with a component (for example, a chip, a chip system, or a processor) disposed in the first communication apparatus, or a logical module, software, or the like that can implement all or some functions of the first communication apparatus.

The method 1500 shown in FIG. 15 includes step 1510 to step 1530. The following describes in detail the steps in the method 1500.

In step 1510, the ground station generates a plurality of parameter sets, where the plurality of parameter sets include parameters that correspond to a plurality of communication apparatuses and that are used to determine TAs.

Apparatus types of the plurality of communication apparatuses include a relay apparatus and/or a terminal apparatus, and the relay apparatus is configured to forward a signal between the ground station and the terminal apparatus. For example, the plurality of communication apparatuses are all relay apparatuses. For another example, the plurality of communication apparatuses are all terminal apparatuses. For still another example, the plurality of communication apparatuses include at least one relay apparatus and at least one terminal apparatus. In addition, in this application, the relay apparatus may be an amplify-and-forward relay, or may be a decode-and-forward relay. A type of the relay apparatus is not limited in this application. For example, the plurality of communication apparatuses may be the relay apparatus 1, the relay apparatus 2, the relay apparatus 3, and the terminal apparatus shown in FIG. 3.

In this application, that the plurality of parameter sets include the parameters that correspond to the plurality of communication apparatuses and that are used to determine the TAs may be understood as follows: The plurality of parameter sets are in one-to-one correspondence with the plurality of communication apparatuses, and each parameter set includes a parameter used by a corresponding apparatus to determine a TA.

For example, the plurality of parameter sets include a parameter set 1, a parameter set 2, a parameter set 3, and a parameter set 4. The four parameter sets are parameter sets that correspond to four communication apparatuses (such as a communication apparatus 1, a communication apparatus 2, a communication apparatus 3, and a communication apparatus 4) and that are used to determine TAs. For example, the parameter set 1 includes a parameter used by the communication apparatus 1 to determine a TA, the parameter set 2 includes a parameter used by the communication apparatus 2 to determine a TA, the parameter set 3 includes a parameter used by the communication apparatus 3 to determine a TA, and the parameter set 4 includes a parameter used by the communication apparatus 4 to determine a TA.

In step 1520, the ground station sends the plurality of parameter sets, where the foregoing plurality of parameter sets are carried in a broadcast message of a same cell. Correspondingly, the first communication apparatus receives the plurality of parameter sets.

The first communication apparatus is any one of the plurality of communication apparatuses. The apparatus types of the plurality of communication apparatuses include the relay apparatus and/or the terminal apparatus. The relay apparatus is configured to forward a signal between the ground station and the terminal apparatus, the terminal apparatus may be used as a destination (or a receiving device) of the signal, and the ground station may be used as a source of the signal. For example, the plurality of communication apparatuses are all relay apparatuses, and the first communication apparatus may be any one of the plurality of relay apparatuses. For another example, the plurality of communication apparatuses are all terminal apparatuses, and the first communication apparatus may be any one of the plurality of terminal apparatuses. For still another example, the plurality of communication apparatuses include at least one relay apparatus and at least one terminal apparatus, and the first communication apparatus may be any one of the at least one terminal apparatus, or may be any one of the at least one relay apparatus.

In this application, the cell may be understood as an area in which the relay apparatus provides a service or an area in which the ground station provides a service. The plurality of parameter sets are carried in the broadcast message of the same cell, in other words, a broadcast message of one cell may carry the plurality of parameter sets. It should be noted that there may be one or more cells in which the plurality of parameter sets are broadcast, provided that a quantity of cells in which the plurality of parameter sets are broadcast is less than a total quantity of areas in which the relay apparatus and the ground station provide services. Compared with broadcasting a corresponding parameter set in each cell, this manner can reduce resource waste to some extent.

For example, in the communication system shown in FIG. 3, the plurality of communication apparatuses include a terminal and three relay apparatuses between the ground station and the terminal apparatus. It is assumed that coverage areas in which the three relay apparatuses are located are a coverage area 1, a coverage area 2, and a coverage area 3 respectively, and a coverage area in which the terminal apparatus is located is a coverage area 4. The four coverage areas may be logically considered as one cell, and the ground station may send a broadcast message based on a time-frequency resource corresponding to the cell, where the broadcast message carries the plurality of parameter sets.

It should be understood that merely an example in which the four coverage areas are considered as one cell is used. This should not constitute any limitation on embodiments of this application. For example, the four coverage areas may alternatively be divided into two cells (where for example, the coverage area 1 and the coverage area 2 form one cell 1, and the coverage area 3 and the coverage area 4 form one cell 2). The ground station may broadcast, based on a time-frequency resource corresponding to the cell 1, a parameter set corresponding to the coverage area 1 and a parameter set corresponding to the coverage area 2, and broadcast, based on a time-frequency resource corresponding to the cell 2, a parameter set corresponding to the coverage area 3 and a parameter set corresponding to the coverage area 4. This is not limited in this application.

It should be further understood that, in this application, the broadcast message carrying the plurality of parameter sets may be a SIB 19, or may be another type of broadcast message such as other system information (other system information, OSI), a master information block (master information block, MIB), or a physical broadcast channel (physical broadcast channel) message. The ground station may perform sending in a broadcast or multicast manner. This is not limited in this application. Sending, by the ground station, the foregoing signaling in the broadcast or multicast manner helps avoid scheduling different resources for different terminals to send the foregoing signaling, reduce signaling overheads for resource scheduling, and reduce system scheduling complexity.

In addition, if the plurality of parameter sets are sent in a radio resource control (radio resource control, RRC) connection setup phase and a subsequent communication process, the ground station may send the plurality of parameter sets by using at least one of RRC signaling (such as RRC setup (RRC setup) signaling, RRC reconfiguration (RRC reconfiguration) signaling, or RRC resume (RRC resume) signaling), DCI, group DCI, or a MAC CE. Alternatively, the foregoing signaling/parameter value is indicated to the relay apparatus or the terminal apparatus by using a table, or is sent to the relay apparatus or the terminal apparatus in a unicast or multicast manner during data transmission or in a separately allocated PDSCH bearer. Sending the foregoing signaling to the relay apparatus or the terminal apparatus separately or in groups helps flexibly control a parameter value of each relay apparatus or terminal apparatus/each group of relay apparatuses or terminal apparatuses, and different parameter values are configured for the relay apparatus or the terminal apparatus based on different locations or different areas of the relay apparatus or the terminal apparatus, to optimize system parameters and optimize communication performance of the terminal/communication performance of the system. For example, different uplink synchronization and timing parameter values may be configured for the relay apparatus or the terminal apparatus based on the different locations of the relay apparatus or the terminal apparatus, to optimize a scheduling delay of each relay apparatus or terminal apparatus/each group of relay apparatuses or terminal apparatuses, and improve communication efficiency of the terminal apparatus and the system.

It should be further understood that, when the first communication apparatus is a next-hop node of the ground station, the first communication apparatus may directly receive the plurality of parameter sets from the ground station. For example, in FIG. 3, the first communication apparatus is the relay apparatus 1, the ground station sends the plurality of parameter sets, and the relay apparatus 1 receives the plurality of parameter sets. When there is a relay apparatus between the first communication apparatus and the ground station, in other words, when the first communication apparatus is not a next-hop node of the ground station, the plurality of parameter sets may be forwarded by the relay apparatus to the first communication apparatus. For example, in FIG. 3, it is assumed that when the first communication apparatus is the relay apparatus 2, the ground station sends the plurality of parameter sets, the relay apparatus 1 receives the plurality of parameter sets, and forwards the plurality of parameter sets, and the relay apparatus 2 receives the plurality of parameter sets forwarded by the relay apparatus 1. It should be noted that the relay apparatus 1 may be an amplify-and-forward relay, or may be a decode-and-forward relay. This is not limited in this application.

In step 1530, the first communication apparatus determines a TA based on at least one of the plurality of parameter sets.

After receiving the plurality of parameter sets, the first communication apparatus may determine the TA based on at least one of the plurality of parameter sets.

For example, in the communication system shown in FIG. 3, the relay apparatus 1 receives the plurality of parameter sets from the ground station, and determines a TA based on at least one of the plurality of parameter sets. In addition, the relay apparatus 1 may further forward the plurality of parameter sets. After receiving the plurality of parameter sets, the relay apparatus 2 may also determine a TA based on at least one of the plurality of parameter sets.

Optionally, after determining the TA, the first communication apparatus may further perform uplink transmission with the ground station based on the TA.

For example, after determining a TA, the terminal apparatus may perform uplink transmission with the ground station based on the TA.

The following describes in detail possible designs of the plurality of parameter sets.

In a first possible design of the plurality of parameter sets, the plurality of parameter sets are in one-to-one correspondence with a plurality of reference locations, and the plurality of reference locations are in coverage areas of the relay apparatus and the ground station. In other words, each of the plurality of parameter sets corresponds to one reference location, and the plurality of parameter sets are distinguished based on the plurality of reference locations.

FIG. 16a and FIG. 16b are diagrams of coverage areas in which a relay apparatus and a terminal apparatus are located according to an embodiment of this application.

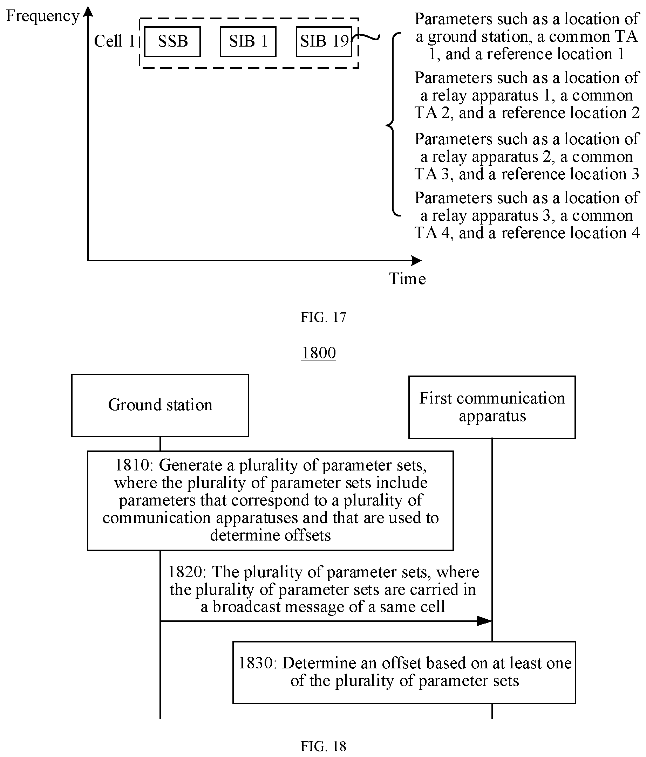

For example, as shown in FIG. 16a, the plurality of communication apparatuses include a terminal and three relay apparatuses between the ground station and the terminal. It is assumed that the three relay apparatuses are located in a coverage area 1 (an area served by the ground station), a coverage area 2 (an area served by a forwarded signal of the relay apparatus 1), and a coverage area 3 (an area served by a forwarded signal of the relay apparatus 2) respectively, and an area in which the terminal is located is a coverage area 4 (an area served by a forwarded signal of the relay apparatus 3). In existing technologies, as shown in FIG. 13, logically, the foregoing four coverage areas may be different cells. For example, the coverage area 1 is a cell 1, the coverage area 2 is a cell 2, the coverage area 3 is a cell 3, and the coverage area 4 is a cell 4. The ground station respectively broadcasts, for different cells, parameters used to determine TAs. In the method provided in this application, the ground station broadcasts the plurality of parameter sets. The plurality of parameter sets are carried in the broadcast message of the same cell. The plurality of parameter sets may be in one-to-one correspondence with the plurality of reference locations. As shown in FIG. 16b, the plurality of reference locations include a reference location 1 to a reference location 4. For example, the reference location 1 is in the coverage area 1, the reference location 2 is in the coverage area 2, the reference location 3 is in the coverage area 3, and the reference location 4 is in the coverage area 4. The reference location 1 corresponds to a parameter set 1, the reference location 2 corresponds to a parameter set 2, the reference location 3 corresponds to a parameter set 3, and the reference location 4 corresponds to a parameter set 4. The plurality of parameter sets may be used by the apparatuses in the four coverage areas to determine TAs. Logically, the four coverage areas are one cell (for example, denoted as a cell 1), and a resource occupied by the plurality of parameter sets may be a time-frequency resource of the cell. The following provides detailed descriptions with reference to FIG. 17.

FIG. 17 is a diagram of broadcasting a plurality of parameter sets according to an embodiment of this application.

As shown in FIG. 17, the ground station broadcasts the plurality of parameter sets and the corresponding reference locations based on the time-frequency resource corresponding to the cell 1. In other words, a plurality of coverage areas corresponding to the plurality of parameter sets may be logically considered as one cell (denoted as the cell 1), and the ground station may broadcast the plurality of parameter sets based on the time-frequency resource of the cell, to reduce resource waste.

When the plurality of parameter sets are in one-to-one correspondence with the plurality of reference locations, the at least one parameter set is determined based on the plurality of reference locations. In other words, the first communication apparatus may determine at least one parameter set based on the plurality of reference locations, and determine the TA based on the at least one parameter set.

In a possible implementation, the at least one parameter set includes a parameter set corresponding to a reference location that is in the plurality of reference locations and that is closest to the first communication apparatus. In other words, for any one of the plurality of communication apparatuses, at least one parameter set used to determine a TA includes a parameter set corresponding to a reference location that is in the plurality of reference locations and that is closest to the communication apparatus.

In an example, the first communication apparatus determines a TA based on a parameter set (which may be denoted as a target parameter set) in the plurality of parameter sets. In this case, the target parameter set may be the parameter set corresponding to the reference location that is in the plurality of reference locations and that is closest to the first communication apparatus.

In another example, the first communication apparatus determines a TA based on m parameter sets in the plurality of parameter sets, where m is an integer greater than 1, and a value of m is less than or equal to a quantity of the plurality of parameter sets. In this case, the m parameter sets may include the parameter set corresponding to the reference location that is in the plurality of reference locations and that is closest to the first communication apparatus and a parameter set corresponding to a location of a second communication apparatus, and the second communication apparatus is the ground station or a relay apparatus between the first communication apparatus and the ground station.

The following describes in detail a parameter included in each parameter set when the plurality of parameter sets are in one-to-one correspondence with the plurality of reference locations.

In a possible implementation, each of the plurality of parameter sets includes a location of the ground station and/or a location of the relay apparatus. In the following table, FIG. 16a and FIG. 16b are used as an example for description. The plurality of communication apparatuses include a relay apparatus 1, a relay apparatus 2, a relay apparatus 3, and a terminal apparatus. The reference location 1 is in a coverage area 1, the reference location 2 is in a coverage area 2, the reference location 3 is in a coverage area 3, the reference location 4 is in a coverage area 4, the relay apparatus 1 is located in the coverage area 1, the relay apparatus 2 is located in the coverage area 2, the relay apparatus 3 is located in the coverage area 3, and the terminal apparatus is located in the coverage area 4. The four coverage areas may be logically one cell (for example, denoted as a cell 1).

**Table 2**

| Parameter set index | Reference location | Parameter in the parameter set |
|---|---|---|
| 1 | Reference location 1 | Location of the ground station |
| 2 | Reference location 2 | Location of the ground station + location of the relay apparatus 1 |
| 3 | Reference location 3 | Location of the ground station + location of the relay apparatus 1 + location of the relay apparatus 2 |
| 4 | Reference location 4 | Location of the ground station + location of the relay apparatus 1 + location of the relay apparatus 2 + location of the relay apparatus 3 |

As shown in Table 2, the plurality of parameter sets are in one-to-one correspondence with the plurality of reference locations. The parameter set 1 includes the location of the ground station, the parameter set 2 includes the location of the ground station and the location of the relay apparatus 1, the parameter set 3 includes the location of the ground station, the location of the relay apparatus 1, and the location of the relay apparatus 2, and the parameter set 4 includes the location of the ground station, the location of the relay apparatus 1, the location of the relay apparatus 2, and the location of the relay apparatus 3.

It should be noted that, in this application, parameters shown in Table 2 to Table 14 are merely examples, and should not constitute any limitation on this application. For example, Table 2 to Table 14 may include a parameter set index, or may not include a parameter set index. This is not limited in this application.

After receiving the plurality of parameter sets and the plurality of reference locations, any communication apparatus (namely, the first communication apparatus) in the plurality of communication apparatuses may determine a target parameter set based on the plurality of reference locations, and determine a TA based on the target parameter set. In an example, the relay apparatus 1 determines, based on the plurality of reference locations and the location of the relay apparatus 1, that the reference location 1 is a closest reference location, and the relay apparatus 1 may determine a TA based on the parameter set 1 corresponding to the reference location 1. For example, the relay apparatus 1 may determine a round-trip delay between the relay apparatus 1 and the ground station based on the location of the relay apparatus 1 and the location of the ground station, and calculate the TA according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0 (where for example, the base station sends ${N}_{TA , adj}^{common} = 0$ to the relay apparatus 1; or an ${N}_{TA , adj}^{common}$ parameter is not sent, and it is considered by default that ${N}_{TA , adj}^{common} = 0$), and ${N}_{TA , adj}^{UE}$ is determined based on the round-trip delay between the relay apparatus 1 and the ground station. For explanations of other parameters in the formula, refer to the foregoing descriptions, and details are not described herein again.

In another example, the terminal determines, based on the plurality of reference locations, that the reference location 4 is a closest reference location, and the terminal may determine a TA based on the parameter set 4 corresponding to the reference location 4. For example, the terminal may determine a round-trip delay between the terminal and the ground station based on the location of each apparatus in the parameter set 4, and determine a value of N_{T}^{U}_{A}^{E}_{,adj} based on the round-trip delay. For example, the round-trip delay between the terminal apparatus and the ground station = a round-trip delay between the ground station and the relay apparatus 1 + a round-trip delay between the relay apparatus 1 and the relay apparatus 2 + a round-trip delay between the relay apparatus 2 and the relay apparatus 3 + a round-trip delay between the relay apparatus 3 and the terminal, and the TA is calculated according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and ${N}_{TA , adj}^{UE}$ is determined based on the round-trip delay between the terminal apparatus and the ground station. For example, ${N}_{TA , adj}^{UE}$ is equal to the round-trip delay between the terminal apparatus and the ground station. For explanations of other parameters in the formula, refer to the foregoing descriptions, and details are not described herein again.

In still another example, the relay apparatus 3 determines, based on the plurality of reference locations, that the reference location 3 is a closest reference location, and the relay apparatus 3 may determine a TA based on the parameter set 3 corresponding to the reference location 3. For example, the relay apparatus 3 may determine a round-trip delay between the relay apparatus 3 and the ground station based on the location of each apparatus in the parameter set 3. For example, the round-trip delay between the relay apparatus 3 and the ground station = a round-trip delay between the ground station and the relay apparatus 1 + a round-trip delay between the relay apparatus 1 and the relay apparatus 2 + a round-trip delay between the relay apparatus 2 and the relay apparatus 3, and the TA is calculated according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and N_{T}^{U}_{A}^{E}_{,adj} is determined based on the round-trip delay between the relay apparatus 3 and the ground station.

For example, N_{T}^{U}_{A}^{E}_{,adj} is equal to the round-trip delay between the relay apparatus 3 and the ground station. For explanations of other parameters in the formula, refer to the foregoing descriptions, and details are not described herein again.

**Table 3**

| Parameter set index | Reference location | Parameter in the parameter set |
|---|---|---|
| 1 | Reference location 1 | Location of the ground station |
| 2 | Reference location 2 | Location of the relay apparatus 1 |
| 3 | Reference location 3 | Location of the relay apparatus 2 |
| 4 | Reference location 4 | Location of the relay apparatus 3 |

As shown in Table 3, the plurality of parameter sets are in one-to-one correspondence with the plurality of reference locations, and each parameter set includes a location of one communication apparatus. The parameter set 1 includes the location of the ground station, the parameter set 2 includes the location of the relay apparatus 1, the parameter set 3 includes the location of the relay apparatus 2, and the parameter set 4 includes the location of the relay apparatus 3.

In a possible implementation, after the terminal apparatus or the relay apparatus determines a parameter set index number, the terminal apparatus or the relay apparatus determines a TA based on a parameter in a parameter set whose index number less than or equal to the index number.

After receiving the plurality of parameter sets and the plurality of reference locations, any communication apparatus (namely, the first communication apparatus) in the plurality of communication apparatuses may determine at least one parameter set based on the plurality of reference locations, and determine a TA based on the at least one parameter set.

In an example, the terminal apparatus determines, based on the plurality of reference locations, that the reference location 4 is a reference location closest to the terminal, and the terminal apparatus may determine a TA based on the parameter set 4 corresponding to the reference location 4, the location of the relay apparatus 2, the location of the relay apparatus 1, and the location of the ground station. In other words, the at least one parameter set includes the parameter set corresponding to the reference location closest to the first communication apparatus and a parameter set including a location of a second communication apparatus, and the second communication apparatus is the ground station or a relay apparatus between the first communication apparatus and the ground station.

The terminal apparatus may determine a round-trip delay between the terminal apparatus and the ground station based on the location of each apparatus. For example, the round-trip delay between the terminal apparatus and the ground station = a round-trip delay between the ground station and the relay apparatus 1 + a round-trip delay between the relay apparatus 1 and the relay apparatus 2 + a round-trip delay between the relay apparatus 2 and the relay apparatus 3 + a round-trip delay between the relay apparatus 3 and the terminal apparatus, and the TA is calculated according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and ${N}_{TA , ad j}^{UE}$ is determined based on the round-trip delay between the terminal apparatus and the ground station. For explanations of other parameters in the formula, refer to the foregoing descriptions, and details are not described herein again.

In another example, the relay apparatus 3 determines, based on the plurality of reference locations, that the reference location 3 is a reference location closest to the relay apparatus 3, and the relay apparatus 3 may determine a TA based on the parameter set 3 corresponding to the reference location 3 and the locations of the relay apparatus 1 and the ground station. For example, the relay apparatus 3 may determine a round-trip delay between the relay apparatus 3 and the ground station based on the locations of the relay apparatus 3, the relay apparatus 2, the relay apparatus 1, and the ground station. For example, the round-trip delay between the relay apparatus 3 and the ground station = a round-trip delay between the ground station and the relay apparatus 1 + a round-trip delay between the relay apparatus 1 and the relay apparatus 2 + a round-trip delay between the relay apparatus 2 and the relay apparatus 3, and the TA is calculated according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and ${N}_{TA , adj}^{UE}$ is determined based on the round-trip delay between the relay apparatus 3 and the ground station. For example, ${N}_{TA , adj}^{UE}$ is equal to the round-trip delay between the relay apparatus 3 and the ground station. For explanations of other parameters in the formula, refer to the foregoing descriptions, and details are not described herein again.

Optionally, the locations of the apparatuses and the reference locations may alternatively be represented in a differential form. The following provides detailed descriptions by using an example in which the locations of the apparatuses are represented in the differential form.

**Table 4**

| Parameter set index | Reference location | Parameter in the parameter set |
|---|---|---|
| 1 | Reference location 1 | Location of the ground station |
| 2 | Reference location 2 | ΔLocation of the relay apparatus 1 |
| 3 | Reference location 3 | ΔLocation of the relay apparatus 2 |
| 4 | Reference location 4 | ΔLocation of the relay apparatus 3 |

As shown in Table 4, the location of the relay apparatus 1 in the parameter set 2 = the location of the ground station + Δthe location of the relay apparatus 1, the location of the relay apparatus 2 in the parameter set 3 = the location of the ground station + Δthe location of the relay apparatus 2, and the location of the relay apparatus 3 in the parameter set 4 = the location of the ground station + Δthe location of the relay apparatus 3. Alternatively, the location of the relay apparatus 1 in the parameter set 2 = the location of the ground station + Δthe location of the relay apparatus 1, the location of the relay apparatus 2 in the parameter set 3 = the location of the ground station + Δthe location of the relay apparatus 1 + Δthe location of the relay apparatus 2, and the location of the relay apparatus 3 in the parameter set 4 = the location of the ground station + Δthe location of the relay apparatus 1 + Δthe location of the relay apparatus 2 + Δthe location of the relay apparatus 3.

Optionally, each parameter set may further include one or more of the following: a common timing advance, a common timing advance drift, a common timing advance drift variant, a scheduling offset, or an effective timing offset.

**Table 5**

| Parameter set index | Reference location | Parameter in the parameter set |
|---|---|---|
| 1 | Reference location 1 | Location of the ground station, common TA 1, common TA drift 1, and common TA drift variant 1 |
| 2 | Reference location 2 | Location of the relay apparatus 1, common TA 2, common TA drift 2, and common TA drift variant 2 |
| 3 | Reference location 3 | Location of the relay apparatus 2, common TA 3, common TA drift 3, and common TA drift variant 3 |
| 4 | Reference location 4 | Location of the relay apparatus 3, common TA 4, common TA drift 4, and common TA drift variant 4 |

As shown in Table 5, the plurality of parameter sets are in one-to-one correspondence with the plurality of reference locations. The parameter set 1 includes the location of the ground station, the common TA 1, the common TA drift 1, and the common TA drift variant 1, the parameter set 2 includes the location of the relay apparatus 1, the common TA 2, the common TA drift 2, and the common TA drift variant 2, the parameter set 3 includes the location of the relay apparatus 2, the common TA 3, the common TA drift 3, and the common TA drift variant 3, and the parameter set 4 includes the location of the relay apparatus 3, the common TA 4, the common TA drift 4, and the common TA drift variant 4.

After receiving the plurality of parameter sets and the plurality of reference locations, any communication apparatus (namely, the first communication apparatus) in the plurality of communication apparatuses may determine at least one parameter set based on the plurality of reference locations, and determine a TA based on the at least one parameter set.

In an example, the terminal apparatus determines, based on the plurality of reference locations, that the reference location 4 is a reference location closest to the terminal apparatus, and the terminal apparatus may determine a TA based on the parameter set 4 corresponding to the reference location 4. For example, the terminal apparatus may determine a round-trip delay between the terminal apparatus and the relay apparatus 3 based on the location of the terminal apparatus and the location of the relay apparatus 3, and calculate the TA according to the following formula: $TA = \left({N}_{TA}+{N}_{TA , offset}+{N}_{TA , adj}^{common}+{N}_{TA , adj}^{UE}\right) {T}_{C}$.${N}_{TA , adj}^{common} = 2 ⋅ {Delay}_{common} \left(t\right) .$${Delay}_{common} \left(t\right) = \frac{{TA}_{common}}{2} + \frac{{TA}_{commonDrift}}{2} \times \left(t-{t}_{epoch}\right) + \frac{{TA}_{commonDriftvariant}}{2} \times {\left(t-{t}_{epoch}\right)}^{2} ,$ TA_{common} represents a common TA, TA_{commonDrift} represents a common TA drift, TA_{commonDriftvariant} represents a common TA drift variant, t_{epoch} represents a reference time point sent by the ground station to the terminal apparatus, and N_{T}^{U}_{A}^{E}_{,adj} may be determined based on the round-trip delay between the terminal apparatus and the relay apparatus 3. For example, N_{T}^{U}_{A}^{E}_{,adj} is equal to the round-trip delay between the terminal apparatus and the relay apparatus 3. For explanations of other parameters in the formula, refer to the foregoing descriptions, and details are not described herein again.

As described above, each parameter set may further include Koffset and/or Kmac.

**Table 6**

| Parameter set index | Reference location | Parameter in the parameter set |
|---|---|---|
| 1 | Reference location 1 | Location of the ground station, common TA 1, common TA drift 1, common TA drift variant 1, Koffset 1, and Kmac 1 |
| 2 | Reference location 2 | Location of the relay apparatus 1, common TA 2, common TA drift 2, common TA drift variant 2, Koffset 2, and Kmac 2 |
| 3 | Reference location 3 | Location of the relay apparatus 2, common TA 3, common TA drift 3, common TA drift variant 3, Koffset 3, and Kmac 3 |
| 4 | Reference location 4 | Location of the relay apparatus 3, common TA 4, common TA drift 4, common TA drift variant 4, Koffset 4, and Kmac 4 |

As shown in Table 6, a difference from Table 5 lies in that each parameter set may further include Koffset and Kmac. If the parameter set includes Koffset, the first communication apparatus may further determine Koffset; and/or if the parameter set includes Kmac, the first communication apparatus may further determine Kmac.

It should be understood that the parameter included in each parameter set in Table 2 to Table 4 may further include a scheduling offset and/or an effective timing offset. Examples are not listed one by one herein.

It should be further understood that each parameter in the parameter set may be represented in a differential form. Table 7 shows a case in which the common TA, the common TA drift, the common TA drift variant, Koffset 2, and Kmac 2 are represented in the differential form.

**Table 7**

| Parameter set index | Reference location | Parameter in the parameter set |
|---|---|---|
| 1 | Reference location 1 | Location of the ground station, common TA 1, common TA drift 1, common TA drift variant 1, Koffset 1, and Kmac 1 |
| 2 | Reference location 2 | Location of the relay apparatus 1, Δcommon TA 2, Δcommon TA drift 2, Δcommon TA drift variant 2, ΔKoffset 2, and ΔKmac 2 |
| 3 | Reference location 3 | Location of the relay apparatus 2, Δcommon TA 3, Δcommon TA drift 3, Δcommon TA drift variant 3, ΔKoffset 3, and ΔKmac 3 |
| 4 | Reference location 4 | Location of the relay apparatus 3, Δcommon TA 4, Δcommon TA drift 4, Δcommon TA drift variant 4, ΔKoffset 4, and ΔKmac 4 |

As shown in Table 7, a common TA corresponding to the parameter set 2 = the common TA 1 + Δthe common TA 2, a common TA corresponding to the parameter set 3 = the common TA 1 + Δthe common TA 3, and a common TA corresponding to the parameter set 4 = the common TA 1 + Δthe common TA 4. Alternatively, a common TA corresponding to the parameter set 2 = the common TA 1 + Δthe common TA 2, a common TA corresponding to the parameter set 3 = the common TA 1 + Δthe common TA 2 + Δthe common TA 3, and a common TA corresponding to the parameter set 4 = the common TA 1 + Δthe common TA 2 + Δthe common TA 3 + Δthe common TA 4. The same applies to other parameters, and details are not described herein again.

It should be noted that in this application, a location of an apparatus may be an accurate location of the apparatus, or may be a reference location of the apparatus relative to a reference object, or may be a reference location or a reference point location at a distance from the accurate location of the apparatus. This is not limited in this application. In addition, the location of the apparatus may be indicated by using location coordinates, or may be indicated by using an ephemeris. This is not limited in this application.

In a second possible design of the plurality of parameter sets, the plurality of parameter sets are in one-to-one correspondence with identifiers of the apparatus types of the plurality of communication apparatuses. In other words, each of the plurality of parameter sets corresponds to an identifier of a type of one apparatus. The plurality of parameter sets are distinguished based on the identifiers of the apparatus types of the plurality of communication apparatuses.

For example, the plurality of communication apparatuses include a terminal and two relay apparatuses between the ground station and the terminal apparatus. It is assumed that the two relay apparatuses are respectively an amplify-and-forward relay and a decode-and-forward relay. The plurality of parameter sets include a parameter set 1, a parameter set 2, and a parameter set 3. The amplify-and-forward relay corresponds to the parameter set 1, the decode-and-forward relay corresponds to the parameter set 3, and the terminal apparatus corresponds to the parameter set 2.

When the plurality of parameter sets are in one-to-one correspondence with the identifiers of the apparatus types of the plurality of communication apparatuses, the at least one parameter set includes a parameter set corresponding to an identifier of an apparatus type of the first communication apparatus. In other words, for any one of the plurality of communication apparatuses, at least one parameter set used to determine a TA includes a parameter set corresponding to an identifier of an apparatus type of the communication apparatus. In an example, the first communication apparatus determines a TA based on a parameter set (which may be denoted as a target parameter set) in the plurality of parameter sets. In this case, the target parameter set may be the parameter set corresponding to the identifier of the apparatus type of the first communication apparatus.

In another example, the first communication apparatus determines a TA based on m parameter sets in the plurality of parameter sets, where m is an integer greater than 1, and a value of m is less than or equal to a quantity of the plurality of parameter sets. In this case, the m parameter sets may include the parameter set corresponding to the identifier of the apparatus type of the first communication apparatus and a parameter set corresponding to a location of a second communication apparatus, and the second communication apparatus is the ground station or a relay apparatus between the first communication apparatus and the ground station.

**Table 8**

| Parameter set index | Identifier of the apparatus type | Parameter in the parameter set |
|---|---|---|
| 1 | Amplify-and-forward relay | Location of the ground station |
| 2 | Decode-and-forward relay | Location of the ground station + location of a relay apparatus 1 |
| 3 | Terminal apparatus | Location of the ground station + location of the relay apparatus 1 + location of a relay apparatus 2 |

As shown in Table 8, the foregoing plurality of parameter sets are in one-to-one correspondence with the identifiers of the apparatus types of the plurality of communication apparatuses. The parameter set 1 includes the location of the ground station, the parameter set 2 includes the location of the ground station and the location of the relay apparatus 1, and the parameter set 3 includes the location of the ground station, the location of the relay apparatus 1, and the location of the relay apparatus 2.

Assuming that the relay apparatus 1 is the amplify-and-forward relay, the relay apparatus 1 determines, based on the apparatus type, to calculate a TA based on the parameter set 1. For example, the relay apparatus 1 may determine a round-trip delay between the relay apparatus 1 and the ground station based on the location of the relay apparatus 1 and the location of the ground station, and calculate the TA according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and ${N}_{TA , adj}^{UE}$ is determined based on the round-trip delay between the relay apparatus 1 and the ground station. For example, ${N}_{TA , adj}^{UE}$ is equal to the round-trip delay between the relay apparatus 1 and the ground station. For explanations of other parameters in the formula, refer to the foregoing descriptions, and details are not described herein again.

**Table 9**

| Parameter set index | Identifier of the apparatus type | Parameter in the parameter set |
|---|---|---|
| 1 | Relay apparatus | Location of the ground station |
| 2 | Terminal apparatus | Location of the ground station + location of the relay apparatus 1 |

As shown in Table 9, the plurality of parameter sets are in one-to-one correspondence with the identifiers of the apparatus types of the plurality of communication apparatuses. The parameter set 1 includes the location of the ground station, and the parameter set 2 includes the location of the ground station and the location of the relay apparatus 1.

Assuming that the first communication apparatus is the terminal, the terminal determines, based on the apparatus type, to calculate a TA based on the parameter set 2. For example, the terminal apparatus may determine a round-trip delay between the terminal apparatus and the ground station based on the locations of the terminal apparatus, the relay apparatus 1, and the ground station, and calculate the TA according to the following formula: $TA = \left({N}_{TA}+{N}_{TA , offset}+{N}_{TA , adj}^{common}+{N}_{TA , adj}^{UE}\right) {T}_{C}$, where ${N}_{TA , adj}^{common}$ is equal to 0, and ${N}_{TA , adj}^{UE}$ is determined based on the round-trip delay between the terminal apparatus and the ground station. For example, ${N}_{TA , adj}^{UE}$ is equal to the round-trip delay between the terminal apparatus and the ground station. For explanations of other parameters in the formula, refer to the foregoing descriptions, and details are not described herein again.

It should be understood that the parameters included in the parameter sets in Table 8 and Table 9 are merely examples, and should not constitute any limitation on embodiments of this application. The parameter set may further include the parameters included in the parameter sets in Table 3 to Table 7, that is, the reference locations in Table 3 to Table 7 may be replaced with the identifiers of the apparatus types.

In addition, when the identifiers of the apparatus types correspond to the parameter sets, if each parameter set further includes Koffset, the first communication apparatus may further determine Koffset; and/or if each parameter set further includes Kmac, the first communication apparatus may further determine Kmac. Alternatively, each parameter set may include only Koffset. In this case, the first communication apparatus may determine at least one parameter set based on the plurality of reference locations, and further determine Koffset based on the at least one parameter set. Similarly, each parameter set may include only Kmac. In this case, the first communication apparatus may determine at least one parameter set based on the plurality of reference locations, and further determine Kmac based on the at least one parameter set. For more detailed descriptions, refer to related descriptions in a case in which the plurality of reference locations are in one-to-one correspondence with the plurality of parameter sets, and details are not described herein again.

In this application, the first communication apparatus may alternatively determine, depending on whether a location of the first communication apparatus can be obtained, a manner to determine the at least one parameter set. For example, the plurality of parameter sets may be in one-to-one correspondence with the plurality of reference locations, and the plurality of parameter sets are in one-to-one correspondence with the identifiers of the apparatus types of the plurality of communication apparatuses. In other words, the ground station may broadcast the correspondence between the plurality of parameter sets and the plurality of reference locations, and broadcast the correspondence between the plurality of parameter sets and the identifiers of the apparatus types of the plurality of communication apparatuses, so that the first communication apparatus more flexibly selects a manner of determining the at least one parameter set. For example, if the first communication apparatus can determine the location of the first communication apparatus, the first communication apparatus may determine the at least one parameter set based on the plurality of reference locations, or may determine the at least one parameter set based on the apparatus type of the first communication apparatus. If the first communication apparatus cannot determine the location of the first communication apparatus, the first communication apparatus may determine the at least one parameter set based on the apparatus type of the first communication apparatus.

In a third possible design of the foregoing plurality of parameter sets, the ground station may not send a reference location or an identifier of an apparatus type, but send only the plurality of parameter sets. For example, the plurality of parameter sets are in one-to-one correspondence with parameter set indexes. In this design, the first communication apparatus may sequentially determine whether each parameter set includes a location of the first communication apparatus, to determine whether to use the parameter set to determine the TA. For example, the first communication apparatus may sequentially determine, starting from a maximum parameter set index to a smaller index value, whether the parameter sets include the location of the first communication apparatus. If a parameter set includes the location of the first communication apparatus, the parameter set is not used until a parameter set that does not include the location of the first communication apparatus is found, and then the parameter set is used.

**Table 10**

| Parameter set index | Parameter in the parameter set |
|---|---|
| 1 | Location of the ground station |
| 2 | Location of the ground station + location of a relay apparatus 1 |
| 3 | Location of the ground station + location of the relay apparatus 1 + location of a relay apparatus 2 |
| 4 | Location of the ground station + location of the relay apparatus 1 + location of the relay apparatus 2 + location of a relay apparatus 3 |

As shown in Table 10, the relay apparatus 2 performs determining starting from a maximum parameter set index, and determines that the parameter set 2 does not include the location of the relay apparatus 2, and may determine a TA based on the parameter set 2. The terminal apparatus performs determining starting from the maximum parameter set index, and determines that the parameter set 4 does not include a location of the terminal apparatus, and may determine a TA based on the parameter set 4.

**Table 11**

| Parameter set index | Parameter in the parameter set |
|---|---|
| 1 | Location of the ground station |
| 2 | Location of the relay apparatus 1 |
| 3 | Location of the relay apparatus 2 |
| 4 | Location of the relay apparatus 3 |

As shown in Table 11, the terminal apparatus performs determining starting from the maximum parameter set index, and determines that the parameter set 4 does not include the location of the terminal apparatus, and may determine the TA based on the parameter set 4. The relay apparatus 2 performs determining starting from the maximum parameter set index, and determines that the parameter set 2 does not include the location of the relay apparatus 2, and may determine the TA based on the parameter set 2.

It should be understood that when a distance between the location of the apparatus in the parameter set and the first communication apparatus is less than a threshold, it may be considered that the parameter set includes the location of the first communication apparatus. The threshold may be predefined, or may be indicated by the ground station. This is not limited in this application.

Optionally, each parameter set may further include one or more of a common TA, a common timing advance drift, a common timing advance drift variant, a scheduling offset, or an effective timing offset. For details, refer to Table 5 to Table 7, and details are not described herein again.

FIG. 18 is a schematic flowchart of another communication method 1800 according to an embodiment of this application. In FIG. 18, the method is described merely by using interaction between a ground station and a first communication apparatus as an example. This should not constitute any limitation on this application. The ground station in FIG. 18 may be replaced with a component (for example, a chip, a chip system, or a processor) disposed in the ground station, or a logical module, software, or the like that can implement all or some functions of the ground station. The first communication apparatus may be replaced with a component (for example, a chip, a chip system, or a processor) disposed in the first communication apparatus, or a logical module, software, or the like that can implement all or some functions of the first communication apparatus.

The method 1800 shown in FIG. 18 includes step 1810 to step 1830. The following describes in detail the steps in the method 1800.

In step 1810, the ground station generates a plurality of parameter sets, where the plurality of parameter sets include parameters that correspond to a plurality of communication apparatuses and that are used to determine offsets.

The offset includes a scheduling offset and/or an effective timing offset. For descriptions of the plurality of communication apparatuses, refer to step 1810, and details are not described herein again.

In this application, that the plurality of parameter sets include the parameters that correspond to the plurality of communication apparatuses and that are used to determine the offsets may be understood as follows: The plurality of parameter sets are in one-to-one correspondence with the plurality of communication apparatuses, and each parameter set includes a parameter used by a corresponding apparatus to determine an offset.

The offset may be, for example, a scheduling offset, or may be an effective timing offset. For explanations of the scheduling offset and the effective timing offset, refer to the foregoing descriptions, and details are not described herein again.

For example, the plurality of parameter sets include a parameter set 1, a parameter set 2, a parameter set 3, and a parameter set 4. The four parameter sets are parameter sets that correspond to four communication apparatuses (such as a communication apparatus 1, a communication apparatus 2, a communication apparatus 3, and a communication apparatus 4) and that are used to determine offsets. For example, the parameter set 1 includes a parameter used by the communication apparatus 1 to determine an offset, the parameter set 2 includes a parameter used by the communication apparatus 2 to determine an offset, the parameter set 3 includes a parameter used by the communication apparatus 3 to determine an offset, and the parameter set 4 includes a parameter used by the communication apparatus 4 to determine an offset.

For example, the parameter set 1 includes a scheduling offset 1, the parameter set 2 includes a scheduling offset 2, the parameter set 3 includes a scheduling offset 3, and the parameter set 4 includes a scheduling offset 4. For another example, the parameter set 1 includes an effective timing offset 1, the parameter set 2 includes an effective timing offset 2, the parameter set 3 includes an effective timing offset 3, and the parameter set 4 includes an effective timing offset 4. For still another example, the parameter set 1 includes a scheduling offset 1 and an effective timing offset 1, the parameter set 2 includes a scheduling offset 2 and an effective timing offset 2, the parameter set 3 includes a scheduling offset 3 and an effective timing offset 3, and the parameter set 4 includes a scheduling offset 4 and an effective timing offset 4.

In step 1820, the ground station sends the plurality of parameter sets, where the plurality of parameter sets are carried in a broadcast message of a same cell. Correspondingly, the first communication apparatus receives the plurality of parameter sets.

The first communication apparatus is any one of the plurality of communication apparatuses. Apparatus types of the plurality of communication apparatuses include a relay apparatus and/or a terminal apparatus. The relay apparatus is configured to forward a signal between the ground station and the terminal apparatus. For descriptions of the first communication apparatus, the cell, and the broadcast message, refer to step 1820, and details are not described herein again.

For example, the ground station broadcasts the plurality of parameter sets, and the plurality of parameter sets are carried in a SIB 19. Correspondingly, the first communication apparatus in the plurality of communication apparatuses receives the plurality of parameter sets. For example, in FIG. 3, it is assumed that when the first communication apparatus is the relay apparatus 1, the ground station sends the plurality of parameter sets, and the relay apparatus 1 receives the plurality of parameter sets; or it is assumed that when the first communication apparatus is the relay apparatus 2, the ground station sends the plurality of parameter sets, the relay apparatus 1 receives the plurality of parameter sets, and forwards the plurality of parameter sets, and the relay apparatus 2 receives the plurality of parameter sets forwarded by the relay apparatus 1. Similarly, the relay apparatus 3 receives the plurality of parameter sets forwarded by the relay apparatus 1 and the relay apparatus 2, and the terminal apparatus receives the plurality of parameter sets forwarded by the relay apparatus 1, the relay apparatus 2, and the relay apparatus 3.

In step 1830, the first communication apparatus determines an offset based on at least one of the plurality of parameter sets.

After receiving the plurality of parameter sets, the first communication apparatus may determine the offset based on at least one of the plurality of parameter sets. For example, in the communication system shown in FIG. 3, the relay apparatus 1 receives the plurality of parameter sets from the ground station, and determines an offset based on at least one of the plurality of parameter sets. In addition, the relay apparatus 1 may further forward the plurality of parameter sets. After receiving the plurality of parameter sets, the relay apparatus 2 may also determine an offset based on at least one of the plurality of parameter sets.

For example, if each of the plurality of parameter sets includes a scheduling offset, the first communication apparatus may determine the scheduling offset based on at least one of the plurality of parameter sets. Similarly, if each of the plurality of parameter sets includes an effective timing offset, the first communication apparatus may determine the effective timing offset based on at least one of the plurality of parameter sets. If each of the plurality of parameter sets includes a scheduling offset and an effective timing offset, the first communication apparatus may determine the scheduling offset and the effective timing offset based on at least one of the plurality of parameter sets.

The following describes in detail possible designs of the parameter sets by using an example in which each parameter set includes the scheduling offset and the effective timing offset.

In a possible design, the plurality of parameter sets are in one-to-one correspondence with a plurality of reference locations. For descriptions of the one-to-one correspondence between the plurality of parameter sets and the plurality of reference locations, refer to step 1830, and details are not described herein again.

When the plurality of parameter sets are in one-to-one correspondence with the plurality of reference locations, the at least one parameter set is determined based on the plurality of reference locations.

In other words, the first communication apparatus may determine at least one parameter set based on the plurality of reference locations, and then determine the offset based on the at least one parameter set.

In a possible implementation, the at least one parameter set includes a parameter set corresponding to a reference location that is in the plurality of reference locations and that is closest to the first communication apparatus. In other words, for any one of the plurality of communication apparatuses, at least one parameter set used to determine an offset includes a parameter set corresponding to a reference location that is in the plurality of reference locations and that is closest to the communication apparatus. In this way, accuracy of the determined offset is higher.

In an example, the first communication apparatus determines an offset based on a parameter set (which may be denoted as a target parameter set) in the plurality of parameter sets. In this case, the target parameter set may be the parameter set corresponding to the reference location that is in the plurality of reference locations and that is closest to the first communication apparatus.

In another example, the first communication apparatus determines an offset based on m parameter sets in the plurality of parameter sets, where m is an integer greater than 1, and a value of m is less than or equal to a quantity of the plurality of parameter sets. For example, after the first communication apparatus determines the parameter set corresponding to the reference location that is closest to the first communication apparatus, if an offset in the parameter set is a relative value, for example, the offset in the parameter set is a difference relative to an offset in another parameter set, the first communication apparatus may determine, based on the parameter set and the another parameter set, the offset corresponding to the first communication apparatus.

With reference to Table 12 and Table 13, the following describes in detail a case in which the plurality of parameter sets are in one-to-one correspondence with the plurality of reference locations.

**Table 12**

| Parameter set index | Reference location | Parameter in the parameter set |
|---|---|---|
| 1 | Reference location 1 | Koffset 1 and Kmac 1 |
| 2 | Reference location 2 | Koffset 2 and Kmac 2 |
| 3 | Reference location 3 | Koffset 3 and Kmac 3 |
| 4 | Reference location 4 | Koffset 4 and Kmac 4 |

As shown in Table 12, the plurality of parameter sets are in one-to-one correspondence with the plurality of reference locations. The parameter set 1 includes Koffset 1 and Kmac 1, the parameter set 2 includes Koffset 2 and Kmac 2, the parameter set 3 includes Koffset 3 and Kmac 3, and the parameter set 4 includes Koffset 4 and Kmac 4.

After receiving the plurality of parameter sets and the plurality of reference locations, any communication apparatus (namely, the first communication apparatus) in the plurality of communication apparatuses may determine a target parameter set based on the plurality of reference locations, and determine an offset based on the target parameter set. In an example, the relay apparatus 1 determines, based on the plurality of reference locations and a location of the relay apparatus 1, that the reference location 1 is a closest reference location, and the relay apparatus 1 may determine an offset (for example, the scheduling offset 1 and the effective timing offset 1) based on the parameter set 1 corresponding to the reference location 1.

**Table 13**

| Parameter set index | Reference location | Parameter in the parameter set |
|---|---|---|
| 1 | Reference location 1 | Koffset 1 and Kmac 1 |
| 2 | Reference location 2 | ΔKoffset 2 and ΔKmac 2 |
| 3 | Reference location 3 | ΔKoffset 3 and ΔKmac 3 |
| 4 | Reference location 4 | ΔKoffset 4 and ΔKmac 4 |

As shown in Table 13, the plurality of parameter sets are in one-to-one correspondence with the plurality of reference locations, Koffset corresponding to the parameter set 2 = Koffset 1 + _{ΔKoffset 2}, Koffset corresponding to the parameter set 3 = Koffset 1 + ΔKoffset 3, and Koffset corresponding to the parameter set 4 = Koffset 1 + ΔKoffset 4; or Koffset corresponding to the parameter set 2 = Koffset 1 + ΔKoffset 2, Koffset corresponding to the parameter set 3 = Koffset 1 + ΔKoffset 2 + ΔKoffset 3, and Koffset corresponding to the parameter set 4 = Koffset 1 + ΔKoffset 2 + ΔKoffset 3 + ΔKoffset 4. The same applies to Kmac, and details are not described herein again.

After receiving the plurality of parameter sets and the plurality of reference locations, any communication apparatus (namely, the first communication apparatus) in the plurality of communication apparatuses may determine m parameter sets based on the plurality of reference locations, and determine an offset based on the m parameter sets. In an example, the relay apparatus 3 determines, based on the plurality of reference locations and a location of the relay apparatus 3, that the reference location 3 is a closest reference location, and the relay apparatus 3 may determine an offset based on the parameter set 1 and the parameter set 3 corresponding to the reference location 3. For example, Koffset corresponding to the relay apparatus 3 = Koffset 1 + ΔKoffset 3. Alternatively, the relay apparatus 3 may determine an offset based on the parameter set 3 corresponding to the reference location 3, the parameter set 1, and the parameter set 2. For example, Koffset of the relay apparatus 3 = Koffset 1 + ΔKoffset 2 + ΔKoffset 3.

In another possible design of the plurality of parameter sets, the plurality of parameter sets are in one-to-one correspondence with identifiers of the apparatus types of the plurality of communication apparatuses. In other words, each of the plurality of parameter sets corresponds to an identifier of a type of one apparatus. The plurality of parameter sets are distinguished based on the identifiers of the apparatus types of the plurality of communication apparatuses. For a detailed process of determining the at least one parameter set based on an apparatus type of the first communication apparatus, refer to step 1830, and details are not described herein again.

In this application, the first communication apparatus may alternatively determine, depending on whether a location of the first communication apparatus can be obtained, a manner to determine the at least one parameter set, and then determine the offset. For example, the plurality of parameter sets may be in one-to-one correspondence with the plurality of reference locations, and the plurality of parameter sets are in one-to-one correspondence with the identifiers of the apparatus types of the plurality of communication apparatuses. In other words, the ground station may broadcast the correspondence between the plurality of parameter sets and the plurality of reference locations, and broadcast the correspondence between the plurality of parameter sets and the identifiers of the apparatus types of the plurality of communication apparatuses, so that the first communication apparatus more flexibly selects a manner of determining the at least one parameter set. For example, if the first communication apparatus can determine the location of the first communication apparatus, the first communication apparatus may determine the at least one parameter set based on the plurality of reference locations, or may determine the at least one parameter set based on the apparatus type of the first communication apparatus. If the first communication apparatus cannot determine the location of the first communication apparatus, the first communication apparatus may determine the at least one parameter set based on the apparatus type of the first communication apparatus.

It may be understood that, when the reference locations in Table 12 and Table 13 are replaced with the identifiers of the apparatus types, a possible design of a parameter in each of the plurality of parameter sets may be obtained when the plurality of parameter sets are in one-to-one correspondence with the identifiers of the apparatus types of the plurality of communication apparatuses. Details are not described herein again.

In still another possible design of the foregoing plurality of parameter sets, the ground station may not send a reference location or an identifier of an apparatus type, but send only the plurality of parameter sets. For example, the plurality of parameter sets are in one-to-one correspondence with parameter set indexes. In this design, the first communication apparatus may sequentially determine whether each parameter set includes a location of the first communication apparatus, to determine whether to use the parameter set to determine the offset. For example, the first communication apparatus may sequentially determine, starting from a maximum parameter set index, whether the parameter sets include the location of the first communication apparatus. If a parameter set includes the location of the first communication apparatus, the parameter set is not used until a parameter set that does not include the location of the first communication apparatus is found, and then the parameter set is used.

**Table 14**

| Parameter set index | Parameter in the parameter set |
|---|---|
| 1 | Location of the ground station, Koffset 1, and Kmac 1 |
| 2 | Location of the ground station + location of the relay apparatus 1, Koffset 2, and Kmac 2 |
| 3 | Location of the ground station + location of the relay apparatus 1 + location of the relay apparatus 2, Koffset 3, and Kmac 3 |
| 4 | Location of the ground station + location of the relay apparatus 1 + location of the relay apparatus 2 + location of the relay apparatus 3, Koffset 4, and Kmac 4 |

As shown in Table 14, the relay apparatus 2 performs determining starting from the maximum parameter set index, and determines that the parameter set 2 does not include the location of the relay apparatus 2, and may determine an offset (for example, Koffset 2 and Kmac 2) based on the parameter set 2. The terminal performs determining starting from the maximum parameter set index, and determines that the parameter set 4 does not include a location of the terminal, and may determine an offset (for example, Koffset 4 or Kmac 4) based on the parameter set 4.

It should be understood that the locations of the apparatuses included in the parameter sets shown in Table 14 are merely examples, and should not constitute any limitation on embodiments of this application. For example, the locations of the apparatuses in Table 14 may be replaced with the form in Table 11. Details are not described herein again.

It should be understood that the foregoing embodiments may be separately implemented, or may be implemented in combination with each other. This is not limited in this application.

Based on the foregoing technical solution, the plurality of parameter sets corresponding to the plurality of communication apparatuses are carried in the broadcast message of the same cell, in other words, the plurality of parameter sets may be broadcast in the broadcast message of the same cell. The plurality of parameter sets correspond to the plurality of communication apparatuses, and the plurality of parameter sets are broadcast by using a time-frequency resource corresponding to the cell. The ground station does not need to separately occupy different time-frequency resources for the communication apparatuses to broadcast the parameter sets corresponding to the communication apparatuses. This helps reduce resource waste. For example, compared with FIG. 13, in FIG. 17, the ground station may include a plurality of parameter sets in a broadcast message of one cell. This helps greatly reduce overheads of time-frequency resources.

The foregoing describes in detail the communication methods provided in embodiments of this application with reference to the accompanying drawings. The following describes in detail communication apparatuses provided in embodiments of this application with reference to the accompanying drawings.

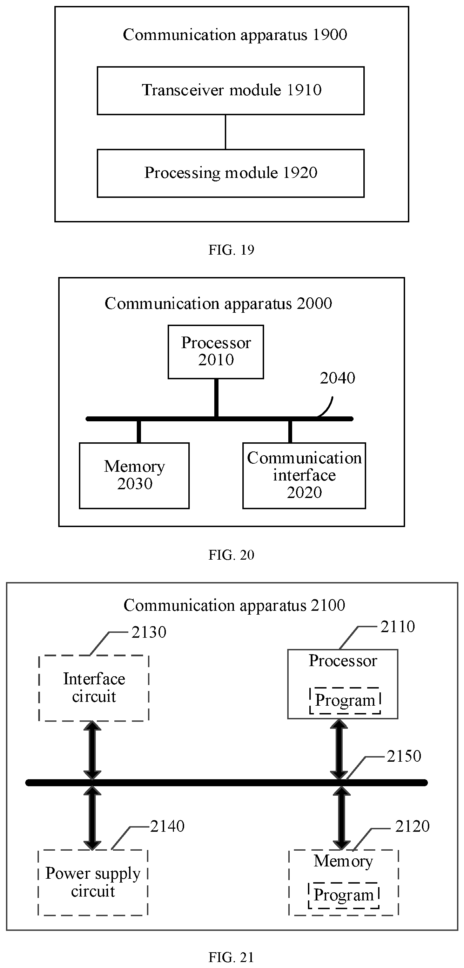

It should be understood that communication apparatuses shown in FIG. 19 and FIG. 20 may be configured to implement functions of the ground station or the first communication apparatus in the foregoing method embodiments, and therefore can also achieve beneficial effects of the foregoing method embodiments. In embodiments of this application, the communication apparatus may be the ground station in the method embodiment shown in FIG. 15 or FIG. 18, or may be a component (for example, a chip, a chip system, or a processor) disposed in the ground station, or may be a logical module or software that can implement some or all functions of the ground station. Alternatively, the apparatus may be the first communication apparatus in the method embodiment shown in FIG. 15 or FIG. 18, or may be a component (for example, a chip, a chip system, or a processor) disposed in the first communication apparatus, or may be a logical module or software that can implement some or all functions of the first communication apparatus.

FIG. 19 is a block diagram of a communication apparatus 1900 according to an embodiment of this application.

As shown in FIG. 19, the communication apparatus 1900 includes a transceiver module 1910 and a processing module 1920. The communication apparatus 1900 may be configured to implement the function of the ground station or the first communication apparatus in the method embodiment shown in FIG. 15 or FIG. 18.

When the apparatus 1900 is configured to implement the function of the first communication apparatus in the method embodiment shown in FIG. 15, the transceiver module 1910 is configured to receive a plurality of parameter sets from a ground station, where the plurality of parameter sets are carried in a broadcast message of a same cell, the plurality of parameter sets include parameters that correspond to a plurality of communication apparatuses and that are used to determine TAs, and apparatus types of the plurality of communication apparatuses include a relay apparatus and/or a terminal apparatus; and the processing module 1920 is configured to determine a TA based on at least one of the plurality of parameter sets.

When the apparatus 1900 is configured to implement the function of the ground station in the method embodiment shown in FIG. 15, the processing module 1920 is configured to generate a plurality of parameter sets, where the plurality of parameter sets include parameters that correspond to a plurality of communication apparatuses and that are used to determine TAs, and apparatus types of the plurality of communication apparatuses include a relay apparatus and/or a terminal apparatus; and the transceiver module 1910 is configured to send the plurality of parameter sets, where the plurality of parameter sets are carried in a broadcast message of a same cell.

Optionally, the plurality of parameter sets are in one-to-one correspondence with a plurality of reference locations, and the plurality of reference locations are in coverage areas of the relay apparatus and the ground station.

When the plurality of parameter sets are in one-to-one correspondence with the plurality of reference locations, the at least one parameter set is determined based on the plurality of reference locations.

Optionally, the plurality of parameter sets are in one-to-one correspondence with identifiers of the apparatus types of the plurality of communication apparatuses.

When the plurality of parameter sets are in one-to-one correspondence with identifiers of the apparatus types of the plurality of communication apparatuses, the at least one parameter set includes a parameter set corresponding to an identifier of an apparatus type of the first communication apparatus.

Optionally, each of the plurality of parameter sets includes a location of the ground station and/or a location of the relay apparatus.

Optionally, each of the plurality of parameter sets further includes one or more of the following: a common timing advance, a common timing advance drift, a common timing advance drift variant, a scheduling offset, or an effective timing offset.

Optionally, the at least one parameter set includes a parameter set corresponding to a reference location that is in the plurality of reference locations and that is closest to the first communication apparatus.

When the apparatus 1900 is configured to implement the function of the first communication apparatus in the method embodiment shown in FIG. 18, the transceiver module 1910 is configured to receive a plurality of parameter sets from a ground station, where the plurality of parameter sets are carried in a broadcast message of a same cell, the plurality of parameter sets include parameters that correspond to the plurality of communication apparatuses and that are used to determine offsets, and apparatus types of the plurality of communication apparatuses include a relay apparatus and/or a terminal apparatus; and the processing module 1920 is configured to determine an offset based on at least one of the plurality of parameter sets, where the offset includes a scheduling offset and/or an effective timing offset.

When the apparatus 1900 is configured to implement the function of the ground station in the method embodiment shown in FIG. 18, the processing module 1920 is configured to generate a plurality of parameter sets, where the plurality of parameter sets include parameters that correspond to a plurality of communication apparatuses and that are used to determine offsets, apparatus types of the plurality of communication apparatuses include a relay apparatus and/or a terminal apparatus, and the offset includes a scheduling offset and/or an effective timing offset; and the transceiver module 1910 is configured to send the plurality of parameter sets, where the plurality of parameter sets are carried in a broadcast message of a same cell.

Optionally, the plurality of parameter sets are in one-to-one correspondence with a plurality of reference locations, and the plurality of reference locations are in coverage areas of the relay apparatus and the ground station.

When the plurality of parameter sets are in one-to-one correspondence with the plurality of reference locations, the at least one parameter set is determined based on the plurality of reference locations.

Optionally, the plurality of parameter sets are in one-to-one correspondence with identifiers of the apparatus types of the plurality of communication apparatuses.

When the plurality of parameter sets are in one-to-one correspondence with the identifiers of the apparatus types of the plurality of communication apparatuses, the at least one parameter set includes a parameter set corresponding to an identifier of an apparatus type of the first communication apparatus.

Optionally, each of the plurality of parameter sets includes the offset.

Optionally, each of the plurality of parameter sets further includes one or more of the following: a location of the relay apparatus, a location of the ground station, a common timing advance, a common timing advance drift, or a common timing advance drift variant.

Optionally, the at least one parameter set includes a parameter set corresponding to a reference location that is in the plurality of reference locations and that is closest to the first communication apparatus.

For a more detailed description about each module, directly refer to related descriptions in the method embodiment shown in FIG. 15 or FIG. 18, and details are not described herein again.

It should be understood that division into modules in embodiments of this application is an example, and is merely logical function division. In an actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 20 is another block diagram of a communication apparatus 2000 according to an embodiment of this application.

The apparatus 2000 may be a chip system, or may be a device configured with a chip system, to implement the method in the foregoing method embodiments. In this embodiment of this application, the chip system may include a chip, or may include a chip and another discrete component.

As shown in FIG. 20, the apparatus 2000 may include a processor 2010. The processor 2010 may be configured to execute a computer program or instructions in a memory, to implement the steps performed by the first communication apparatus or the steps performed by the ground station in the method embodiment shown in FIG. 15 or FIG. 18.

Optionally, the apparatus 2000 further includes a communication interface 2020. The communication interface 2020 may be configured to communicate with another device through a transmission medium, so that the apparatus 2000 may communicate with the another device. The communication interface 2020 may be, for example, a transceiver, an interface, a bus, a circuit, or an apparatus that can implement a transceiver function. The processor 2010 may input and output data through the communication interface 2020, and is configured to implement the method in the embodiment corresponding to FIG. 15 or FIG. 18. Specifically, the apparatus 2000 may be configured to implement a function of the first communication apparatus or the ground station in the foregoing method embodiment.

Optionally, the apparatus 2000 further includes at least one memory 2030, configured to store program instructions and/or data. The memory 2030 is coupled to the processor 2010. The coupling in this embodiment of this application may be an indirect coupling or a communication connection between apparatuses, units, or modules in an electrical form, a mechanical form, or another form, and is used for information exchange between the apparatuses, the units, or the modules. The processor 2010 may cooperate with the memory 2030. The processor 2010 may execute the program instructions stored in the memory 2030. At least one of the at least one memory may be included in the processor.

In this application, the memory 2030 may be integrated into the processor 2010, or the processor 2010 and the memory 2030 may be separately disposed. This is not limited in this application.

It should be understood that the coupling in this embodiment of this application may be an indirect coupling or a communication connection between apparatuses, units, or modules in an electrical form, a mechanical form, or another form, and is used for information exchange between the apparatuses, the units, or the modules. The processor 2010 may cooperate with the memory 2030. A specific connection medium between the processor 2010, the communication interface 2020, and the memory 2030 is not limited in embodiments of this application. In this embodiment of this application, in FIG. 20, the processor 2010, the communication interface 2020, and the memory 2030 are connected through a bus 2040. The bus 2040 is represented by using a bold line in FIG. 20. A connection manner between other components is merely an example for description, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 20, but this does not mean that there is only one bus or only one type of bus.

FIG. 21 is still another diagram of a communication apparatus 2100 according to an embodiment of this application.

As shown in FIG. 21, the communication apparatus 2100 includes at least one processor 2110. The at least one processor 2110 may be configured to execute a computer program or instructions in a memory, to implement the steps performed by the first communication apparatus or the steps performed by the ground station in the embodiment shown in FIG. 15 or FIG. 18.

Optionally, the communication apparatus 2100 may further include at least one memory 2120, configured to store the instructions executed by the processor 2110, or store input data required by the processor 2110 to run the instructions, or store data generated after the processor 2110 runs the instructions. The at least one processor 2110 and the at least one memory 2120 may be separately disposed. For example, each memory may be connected to one or more processors, so that the connected processors can read information from the memory, and store and/or write information into the memory. Alternatively, the at least one processor 2110 and the at least one memory 2120 may be integrated together. For example, one processor may be integrated with one or more memories.

Optionally, the communication apparatus 2100 further includes an interface circuit 2130, which may be used for data and/or signaling transmission. The at least one processor 2110 and the interface circuit 2130 are coupled to each other. It may be understood that the interface circuit 2130 may be a transceiver, an input/output circuit, a bus, a module, a pin, or a communication interface of another type. In the input/output circuit, an input circuit may be used for receiving, and an output interface may be used for sending.

Optionally, the communication apparatus 2100 further includes a power supply circuit 2140, and the power supply circuit 2140 may be configured to supply power to the communication apparatus 2100.

When the communication apparatus 2100 is configured to implement the method shown in FIG. 15, the processor 2110 is configured to perform a function of the foregoing processing module, and the interface circuit 2130 is configured to perform a function of the foregoing transceiver module. Whether the interface circuit 2130 is used for sending or receiving may be specifically determined depending on whether the interface circuit 2130 is configured to perform a sending action or a receiving action in a solution performed by the communication apparatus 2100. For example, the interface circuit 2130 may be configured to perform step 1520 in the method embodiment shown in FIG. 15.

It may be understood that, when the communication apparatus 2100 is a communication device, the interface circuit 2130 may be a transceiver, and may specifically include a transmitter and a receiver. The transmitter is configured to send a signal, and the receiver is configured to receive a signal. When the communication apparatus 2100 is a chip used in a communication device, the interface circuit 2130 may be an input/output circuit, a bus, a module, a pin, or a communication interface of another type. In the input/output circuit, an input circuit may be used for receiving, and an output interface may be used for sending.

It should be understood that in the communication apparatus 2100 shown in FIG. 21, the processor 2110 may correspond to the processing module 1920, and the interface circuit 2130 may correspond to the transceiver module 1910.

It should be further understood that the coupling in this embodiment of this application may be an indirect coupling or a communication connection between apparatuses, units, or modules in an electrical form, a mechanical form, or another form, and is used for information exchange between the apparatuses, the units, or the modules. A specific connection medium between the at least one processor 2110, the at least one memory 2120, the interface circuit 2130, and the power supply circuit 2140 is not limited in embodiments of this application. In this embodiment of this application, in FIG. 21, the processor 2110, the memory 2120, the interface circuit 2130, and the power supply circuit 2140 are connected through a bus 2150. The bus 2150 is represented by using a bold line in FIG. 21. A connection manner between other components is merely an example for description, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 21, but this does not mean that there is only one bus or only one type of bus.

This application further provides a computer program product. The computer program product includes a computer program (which may also be referred to as code or instructions). When the computer program is run, the steps performed by the first communication apparatus or the steps performed by the ground station in the method in the embodiment shown in FIG. 15 or FIG. 18 may be implemented.

This application further provides a computer-readable storage medium. The computer-readable storage medium stores a computer program (which may also be referred to as code or instructions). When the computer program is run, the steps performed by the first communication apparatus or the steps performed by the ground station in the method in the embodiment shown in FIG. 15 or FIG. 18 may be implemented.

This application further provides a chip system. The chip system includes at least one processor, configured to support an implementation of a function in the first communication apparatus or the ground station in the embodiment shown in FIG. 15 or FIG. 18, for example, receiving or processing data in the foregoing method.

In a possible design, the chip system further includes a memory, the memory is configured to store program instructions and data, and the memory is located inside or outside the processor.

In a possible design, the chip system further includes an interface circuit and/or a power supply circuit. The interface circuit is configured to transmit data, and the power supply circuit is configured to supply power to the chip system.

The chip system may include a chip, or may include a chip and another discrete component.

An embodiment of this application provides a communication system. The system includes the first communication apparatus and the ground station described above.

It should be understood that the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

Terms such as "unit" and "module" used in this specification may represent computer related entities, hardware, firmware, combinations of hardware and software, software, or software being executed. The units and the modules in embodiments of this application have a same meaning, and may be used interchangeably.

A person of ordinary skill in the art may be aware that, in combination with various illustrative logical blocks (illustrative logical blocks) and steps (steps) described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into units is merely logical function division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some functions of the functional units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variant or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a plurality of parameter sets from a ground station, wherein the plurality of parameter sets are carried in a broadcast message of a same cell, the plurality of parameter sets comprise parameters that correspond to a plurality of communication apparatuses and that are used to determine timing advances TAs, and apparatus types of the plurality of communication apparatuses comprise a relay apparatus and/or a terminal apparatus; and
determining a TA based on at least one of the plurality of parameter sets.

2. The method according to claim 1, wherein the plurality of parameter sets are in one-to-one correspondence with a plurality of reference locations, the plurality of reference locations are in coverage areas of the relay apparatus and the ground station, and the at least one parameter set is determined based on the plurality of reference locations.

3. The method according to claim 1 or 2, wherein the plurality of parameter sets are in one-to-one correspondence with identifiers of the apparatus types of the plurality of communication apparatuses, the method is applied to a first communication apparatus, the first communication apparatus is any one of the plurality of communication apparatuses, and the at least one parameter set comprises a parameter set corresponding to an identifier of an apparatus type of the first communication apparatus.

4. A communication method, comprising:
generating a plurality of parameter sets, wherein the plurality of parameter sets comprise parameters that correspond to a plurality of communication apparatuses and that are used to determine timing advances TAs, and apparatus types of the plurality of communication apparatuses comprise a relay apparatus and/or a terminal apparatus; and
sending the plurality of parameter sets, wherein the plurality of parameter sets are carried in a broadcast message of a same cell.

5. The method according to claim 4, wherein the plurality of parameter sets are in one-to-one correspondence with a plurality of reference locations, and the plurality of reference locations are in coverage areas of the relay apparatus and a ground station.

6. The method according to claim 4 or 5, wherein the plurality of parameter sets are in one-to-one correspondence with identifiers of the apparatus types of the plurality of communication apparatuses.

7. The method according to any one of claims 1 to 6, wherein each of the plurality of parameter sets comprises a location of the ground station and/or a location of the relay apparatus.

8. The method according to claim 7, wherein each of the plurality of parameter sets further comprises one or more of the following: a common timing advance, a common timing advance drift, a common timing advance drift variant, a scheduling offset, or an effective timing offset.

9. The method according to claim 2, wherein the method is applied to a first communication apparatus, the first communication apparatus is any one of the plurality of communication apparatuses, and the at least one parameter set comprises a parameter set corresponding to a reference location that is in the plurality of reference locations and that is closest to the first communication apparatus.

10. A communication method, comprising:
receiving a plurality of parameter sets from a ground station, wherein the plurality of parameter sets are carried in a broadcast message of a same cell, the plurality of parameter sets comprise parameters that correspond to a plurality of communication apparatuses and that are used to determine offsets, and apparatus types of the plurality of communication apparatuses comprise a relay apparatus and/or a terminal apparatus; and
determining an offset based on at least one of the plurality of parameter sets, wherein the offset comprises a scheduling offset and/or an effective timing offset.

11. The method according to claim 10, wherein the plurality of parameter sets are in one-to-one correspondence with a plurality of reference locations, the plurality of reference locations are in coverage areas of the relay apparatus and the ground station, and the at least one parameter set is determined based on the plurality of reference locations.

12. The method according to claim 10 or 11, wherein the plurality of parameter sets are in one-to-one correspondence with identifiers of the apparatus types of the plurality of communication apparatuses, the method is applied to a first communication apparatus, the first communication apparatus is any one of the plurality of communication apparatuses, and the at least one parameter set comprises a parameter set corresponding to an identifier of an apparatus type of the first communication apparatus.

13. A communication method, comprising:
generating a plurality of parameter sets, wherein the plurality of parameter sets comprise parameters that correspond to a plurality of communication apparatuses and that are used to determine offsets, apparatus types of the plurality of communication apparatuses comprise a relay apparatus and/or a terminal apparatus, and the offset comprises a scheduling offset and/or an effective timing offset; and
sending the plurality of parameter sets, wherein the plurality of parameter sets are carried in a broadcast message of a same cell.

14. The method according to claim 13, wherein the plurality of parameter sets are in one-to-one correspondence with a plurality of reference locations, and the plurality of reference locations are in coverage areas of the relay apparatus and a ground station.

15. The method according to claim 13 or 14, wherein the plurality of parameter sets are in one-to-one correspondence with identifiers of the apparatus types of the plurality of communication apparatuses.

16. The method according to any one of claims 10 to 15, wherein each of the plurality of parameter sets comprises the offset.

17. The method according to claim 16, wherein each of the plurality of parameter sets further comprises one or more of the following:
a location of the relay apparatus, a location of the ground station, a common timing advance, a common timing advance drift, or a common timing advance drift variant.

18. The method according to claim 11, wherein the method is applied to a first communication apparatus, the first communication apparatus is any one of the plurality of communication apparatuses, and the at least one parameter set comprises a parameter set corresponding to a reference location that is in the plurality of reference locations and that is closest to the first communication apparatus.

19. A communication apparatus, comprising a module configured to implement the method according to claim 1, 2, 3, 8, or 9 or claim 7 when dependent on claim 1, 2, or 3, or comprising a module configured to implement the method according to claim 4, 5, 6, or 8 or claim 7 when dependent on claim 4, 5, or 6, or comprising a module configured to implement the method according to claim 10, 11, 12, 17, or 18 or claim 16 when dependent on claim 10, 11, or 12, or comprising a module configured to implement the method according to claim 13, 14, 15, or 17 or claim 16 when dependent on claim 13, 14, or 15.

20. A communication apparatus, comprising a processor and a memory, wherein
the memory is configured to store a computer program; and
the processor is configured to invoke the computer program, to cause the communication apparatus to implement the method according to claim 1, 2, 3, 8, or 9 or claim 7 when dependent on claim 1, 2, or 3, or implement the method according to claim 4, 5, 6, or 8 or claim 7 when dependent on claim 4, 5, or 6, or implement the method according to claim 10, 11, 12, 17, or 18 or claim 16 when dependent on claim 10, 11, or 12, or implement the method according to claim 13, 14, 15, or 17 or claim 16 when dependent on claim 13, 14, or 15.

21. A computer-readable storage medium, wherein the storage medium stores a computer program or instructions, and when the computer program or the instructions are executed by a computer, the method according to any one of claims 1 to 18 is implemented.

22. A computer program product, wherein the computer program product comprises instructions, and when the instructions are run by a computer, the method according to any one of claims 1 to 18 is implemented.
